(19) Europäisches Patentamt
European Patent Office
Office européen des brevets

(11) **EP 2 603 004 A1**

(12) **EUROPEAN PATENT APPLICATION**
published in accordance with Art. 153(4) EPC

(43) Date of publication:
**12.06.2013 Bulletin 2013/24**

(51) Int Cl.:
**H04N 13/00** *(2006.01)* **H04N 7/173** *(2011.01)*

(21) Application number: **12807986.0**

(22) Date of filing: **20.06.2012**

(86) International application number:
**PCT/JP2012/065710**

(87) International publication number:
**WO 2013/005571 (10.01.2013 Gazette 2013/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2011 JP 2011151313**

(71) Applicant: **Sony Corporation Tokyo 108-0075 (JP)**

(72) Inventor: **TSUKAGOSHI, Ikuo Tokyo 108-0075 (JP)**

(74) Representative: **Ealey, Douglas Ralph D Young & Co LLP 120 Holborn London EC1N 2DY (GB)**

(54) **TRANSMITTER, TRANSMISSION METHOD, AND RECEIVER**

(57) Transmission of disparity information is performed so as not to prevent reception processing of a legacy 2D-compatible reception device.

Stereoscopic image data having left eye image data and right eye image data is output. Data of superimposing information to be superimposed on images according to the left eye image data and right eye image data is output. Disparity information for shifting and providing disparity to the superimposing information to be superimposed on the image of the left eye image data and right eye image data is output. Multiplexed stream having a video data stream including stereoscopic image data, the first private data stream including data of superimposing information, and the second private data stream including disparity information is transmitted. With the legacy 2D-compatible reception device on the receiving side, reading only data of superimposing information from the first private data stream can prevent reading of disparity information from impeding the reception processing.

FIG. 11

(a) 2D stream — PES payload: PES Header | DDS | PCS | RCS | CDS | ODS | EDS

(b) 3D EXTENDED stream — PES payload: PES Header | DDS | DSS | EDS

**Description**

Technical Field

The present technology relates to a transmission device, a transmission method, and a reception device. Specifically, the present technology relates to a transmission device or the like transmitting data of superimposing information and disparity information, along with stereoscopic image data having left eye image data and right eye image data.

Background Art

For example, proposed in PTL 1 is a transmission method of stereoscopic image data using television broadcast airwaves. With this transmission method, stereoscopic image data having image data for the left eye and image data for the right eye is transmitted, and stereoscopic image display using binocular disparity is performed.

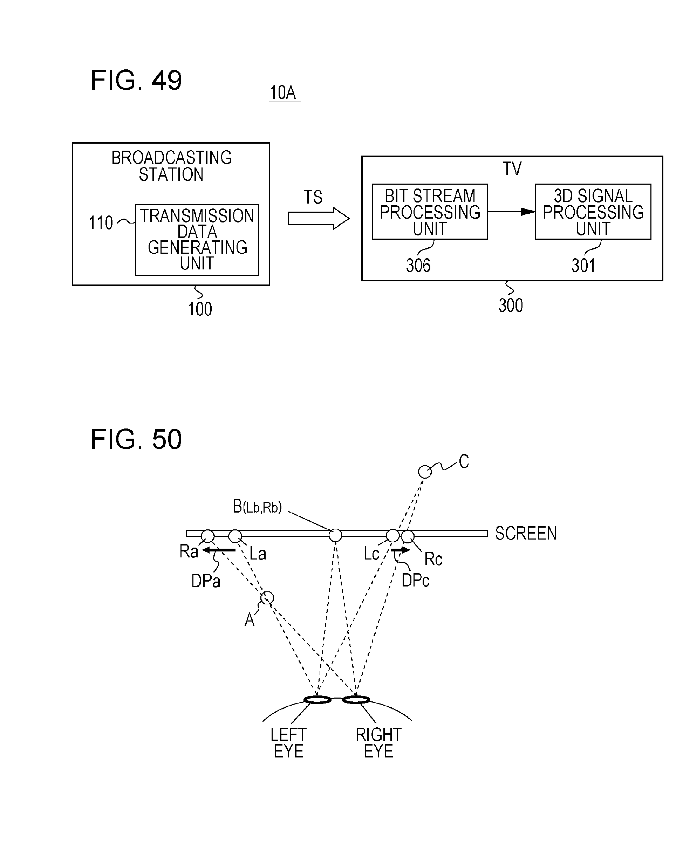

Fig. 50 illustrates relationship between the display positions of left and right images of an object (object) on a screen, and the playback position of the stereoscopic image thereof, with stereoscopic image display using binocular disparity. For example, with regard to an object A displayed with a left image La being shifted to the right side and a right image Ra being shifted to the left side on the screen as illustrated in the drawing, the left and right visual lines intersect in front of the screen surface, so the playback position of the stereoscopic image thereof is in front of the screen surface. DPa represents a disparity vector in the horizontal direction relating to the object A.

Also, for example, as illustrated on the screen, with regard to an object B where a left image Lb and a right image Rb are displayed on the same position, the left and right visual lines intersect on the screen surface, so the playback position of the stereoscopic image thereof is on the screen surface. Further, for example, with regard to an object C with a left image Lc being shifted to the left side and a right image Rc being shifted to the right side on the screen as illustrated in the drawing, the left and right visual lines intersect in the back from the screen surface, so the playback position of the stereoscopic image is in the back from the screen surface. DPc represents a disparity vector in the horizontal direction relating to the object C.

Citation List

Patent Literature

PTL 1: Japanese Unexamined Patent Application Publication No. 2005-6114

Summary of Invention

Technical Problem

With the stereoscopic image display such as described above, the viewer will normally sense perspective of the stereoscopic image taking advantage of binocular disparity. It is anticipated that superimposing information superimposed on the image, such as captions and the like for example, will be rendered not only in two-dimensional space but further in conjunction with the stereoscopic image display with a three-dimensional sense of depth. For example, in the event of performing superimposed (overlay) display of captions on an image, the viewer may sense inconsistency in perspective unless the display is made closer to the viewer than the closest object (object) within the image in terms of perspective.

Accordingly, it can be conceived to transmit disparity information between the left eye image and right eye image along with the data of the superimposing information, and to apply the disparity between the left eye superimposing information and right eye superimposing information at the reception side. In this way, disparity information is significant information with a reception device enabled to display stereoscopic images. On the other hand, this disparity information is unnecessary with a legacy 2D-compatible reception device. With this legacy 2D-compatible reception device, it is necessary to take some kind of measures so that transmission of this disparity information does not impede normal reception processing.

It is an object of this technology to transmit disparity information so as not to interfere with reception processing of a legacy 2D-compatible reception device.

Solution to Problem

A concept of the present technology is a transmission device including:

an image data output unit configured to output left eye image data and right eye image data for displaying a stereoscopic image;

a superimposing information data output unit configured to output data of superimposing information to be superimposed on an image of the left eye image data and the right eye image data;

a disparity information output unit configured to output disparity information which shifts and provides disparity to superimposing information to be superimposed on an image of the left eye image data and the right eye image data; and

a data transmission unit configured to transmit a multiplexed stream having a video data stream including image data output from the image data output unit, a first private data stream including data of superimposing information output from the superimposing information data output unit, and a second private data stream including disparity information output from the disparity information output unit.

With the present technology, left eye image data and right eye image data for displaying a stereoscopic image is output from an image data output unit. Data of superimposing information to be superimposed on the left eye image data and right eye image data is output from the superimposing information data output unit. Here, superimposing information is information such as caption, graphics, text, and so forth, to be superimposed on an image. The disparity information output unit outputs disparity information for shifting and providing disparity to the superimposing information to be superimposed on the image of the left eye image data and right eye image data.

For example, the disparity information is disparity information sequentially updated within a period of a predetermined number of frames during which the superimposing information is displayed, and may be made up of disparity information of a first frame of the period of predetermined number of frames, and disparity information of subsequent frames every updating frame spacing. Also, for example, data of the superimposing information is the subtitle data of a DVB format, and the disparity information may be the disparity information in increments of regions, or in increments of sub regions included in the regions, or the disparity information in increments of pages including all regions.

Multiplexed data stream is transmitted from the data transmitting unit. This multiplexed data stream is has a video data stream including image data, the first private data stream including data of superimposing information, and the second private data stream including disparity information.

In this way, with the present technology, the multiplexed data stream is made to have the first private data stream including data of the superimposing information and the second private data stream including disparity information. Accordingly, with a legacy 2D-compatible reception device on the reception side, impeding of reception processing due to reading of disparity information can be prevented by reading only data of the superimposing information from the first private data stream. Also, with a 3D-compatible reception device, at the reception side, data of the superimposing information from the first private data stream can be read, disparity information from the second private data stream can be read, and display of the superimposing information for the display content of the stereoscopic image is enabled.

Note that, with the present technology, for example, synchronizing information for synchronizing display by data of the superimposing information and shift control by the disparity information may be included in the first private data stream and second private data stream. Thereby, even in the event that the data of the superimposing information and the disparity information are transmitted by different streams, at the reception side, synchronizing of display by the data of the superimposing information and shift control by the disparity information is enabled.

Also, with the present technology, for example, a multiplexed stream may have inserted therein correlation information for correlating the first private data stream and second private data stream. For example, with a 3D-compatible device on the reception side, the fact that the first private data stream and second private data stream are correlated by this correlation information is easily comprehended, so that it is apparent that both streams should be decoded.

Also, another concept of the present technology is a transmission device including:

an image data output unit configured to output left eye image data and right eye image data for displaying a stereoscopic image;

a superimposing information data output unit configured to output data of superimposing information to be superimposed on an image of the left eye image data and the right eye image data;

a disparity information output unit configured to output disparity information which shifts and provides disparity to superimposing information to be superimposed on an image of the left eye image data and the right eye image data; and

a data transmission unit configured to transmit a multiplexed stream having a video data stream including image data output from the image data output unit, a first private data stream including superimposing information data output from the superimposing information data output unit, and a second private data stream including data of superimposing information output from the superimposing information data output unit and disparity information output from the disparity information output unit.

With the present technology, left eye image data and right eye image data for displaying a stereoscopic image are output from the image data output unit. Data of superimposing information to be superimposed on images according to the left eye image data and right eye image data is output from the superimposing information data output unit. Now, superimposing information is information such as caption, graphics, text, and so forth, to be superimposed on an image. The disparity information output unit outputs disparity information for shifting and providing disparity to the superimposing information to be superimposed on the image of the left eye image data and right eye image data.

For example, the disparity information is disparity information sequentially updated within a period of a predetermined number of frames during which the superimposing information is displayed, and may be made up of disparity information of a first frame of the period of predetermined number of frames, and disparity information of subsequent frames every updating frame spacing. Also, for example, data of the superimposing information is the subtitle data of a DVB format, and disparity information may be the disparity information in increments of regions, or in increments of sub regions included in the regions, or the disparity information in increments of pages including all regions.

Multiplexed data stream is transmitted from the data transmitting unit. This multiplexed data stream has a video data stream including image data, the first private data stream including data of superimposing information, and the second private data stream including data of superimposing information and disparity information.

In this way with the present technology, the multiplexed data stream is made to have the first private data stream including data of superimposing information and the second private data stream including data of superimposing information and disparity information. Accordingly, with a legacy 2D-compatible reception device on the reception side, impeding reception processing due to reading of disparity information can be prevented by reading only data of the superimposing information from the first private data stream. Also, with a 3D-compatible reception device, at the reception side, data of the superimposing information and disparity information from the second private data stream can be read, and of the superimposing information for the display content of the stereoscopic image can be displayed.

Also, another concept of the present technology is a reception device, including:

a data reception unit configured to receive a multiplexed data stream having a video data stream, a first private data stream, and a second private data stream;
wherein the video data stream includes left eye image data and right eye image data for displaying a stereoscopic image;
and wherein the first private data stream includes data of superimposing information to be superimposed on images according to the left eye image data and the right eye image data;
and wherein the second private data stream includes disparity information for providing disparity by shifting the superimposing information to be superimposed on images according to the left eye image data and the right eye image data;
and further including:

an information acquiring unit; and
an image data processing unit;
wherein the information acquiring unit extracts the video data stream from the multiplexed data stream received at the data reception unit and acquires the image data included in the video data stream,
extracts the first private data stream from the multiplexed data stream received at the data reception unit, and acquires data of the superimposing information from the first private data stream,
and extracts the second private data stream from the multiplexed data stream received at the data reception unit, and acquires the disparity information from the second private data stream;
and wherein the image data processing unit uses the image data, data of the superimposing information and the disparity information, acquired at the information acquiring unit, provides disparity to the same superimposing information superimposed on the left eye image and right eye image, and obtains left eye image data on which the superimposing information has been superimposed and right eye image data on which the superimposing information has been superimposed.

With the present technology, multiplexed data stream having a video data stream, the first private data stream and second private data stream is received at the data reception unit. The information acquiring unit acquires image data included in the video data stream, data of superimposing information from the first private data stream, and disparity information from the second private data stream.

The image data processing unit uses image data, data of the superimposing information, and disparity information, to provide disparity to the same superimposing information superimposed on the left eye image and right eye image, obtaining left eye image data on which the superimposing information has been superimposed and right eye image data on which the superimposing information has been superimposed.

For example, disparity information is the disparity information sequentially updated within a period of a predetermined number of frames during which the superimposing information is displayed, and an image data processing unit may be made so as to subject disparity information of a plurality of frames, sequentially updated during the period of a predetermined number of frames, to interpolation processing, and generate and use disparity information of an arbitrary frame spacing during the period of a predetermined number of frames. In this case, even in the event of disparity information being transmitted from the transmission side every updating frame spacing, the disparity provided to the superimposing information can be controlled with fine spacings, e.g., every frame.

Also, for example, disparity information is the disparity information sequentially updated within a period of a predetermined number of frames during which the superimposing information is displayed, and the disparity information may have added thereto information of increment periods and the number of the increment periods as the information of updating frame spacings, the image data processing unit obtaining updating points-in-time of the disparity information based on the information of increment periods and information of the number, which is information of the updating frame spacings, with a display start point-in-time of the superimposing information as a reference. In this case, the image data processing unit can sequentially obtain updating points-in-time from the display starting point-in-time of the superimposing information. For example, from a certain updating point-in-time, the next updating point-in-time by be easily obtained by adding the time of increment period x number to the certain updating point-in-time, using information of the increment period which is information of the next updating frame spacing, and information of the number.

In this way with the present technology, data of superimposing information is acquired from the first private data stream and disparity information is acquired from the second private data stream. Thus, the superimposing information for the display content of stereoscopic image can be displayed.

Note that, with the present technology, a multiplexed data stream may have inserted therein correlation information for correlating the first private data stream and second private data stream, and the information acquiring unit may be made to acquire the above disparity information from the second private data stream, along with acquiring data of the superimposing information from the first private data stream, based on the correlation information. Accordingly, processing at a 3D-compatible reception device at the reception side can be performed more suitably.

Also, another concept of this technology is a reception device, including:

a data reception unit configured to receive a multiplexed data stream having a video data stream, a first private data stream, and a second private data stream;
wherein the video data stream includes left eye image data and right eye image data for displaying a stereoscopic image;
and wherein the first private data stream includes data of superimposing information to be superimposed on images according to the left eye image data and the right eye image data;
and wherein the second private data stream includes disparity information for providing disparity by shifting the superimposing information to be superimposed on images according to data of the superimposing information and the left eye image data and the right eye image data;
and further comprising:

an information acquiring unit; and
an image data processing unit;
wherein the information acquiring unit
extracts the video data stream from the multiplexed data stream received at the data reception unit and acquires the image data included in the video data stream, and
extracts the second private data stream from the multiplexed data stream received at the data reception unit and acquires data of the superimposing information and the disparity information from the second private data stream,
and wherein the image data processing unit
uses the image data, data of the superimposing information, and the disparity information acquired at the information acquiring unit, provides disparity with the same superimposing information superimposed on the left eye image and right eye image, and obtains the left eye image data on which the superimposing information has been superimposed and right eye image data on which the superimposing information has been superimposed.

With the present technology, the data reception unit receives a multiplexed data stream having a video data stream, a first private data stream, and a second private data stream. The information acquiring unit acquires image data included in the video data stream, and acquires data of the superimposing information and disparity information from the second private data stream.

The image data processing unit uses image data, data of the superimposing information, and disparity information, to provide disparity to the same superimposing information superimposed on the left eye image and right eye image, obtaining left eye image data on which the superimposing information has been superimposed and right eye image data on which the superimposing information has been superimposed.

For example, disparity information is disparity information sequentially updated within a period of a predetermined number of frames during which the superimposing information is displayed, and an image data processing unit may be made so as to subject disparity information of a plurality of frames, sequentially updated during the period of a predetermined number of frames, to interpolation processing, and generate and use disparity information of an arbitrary frame spacing during the period of a predetermined number of frames. In this case, even in the event of disparity information being transmitted from the transmission side every updating frame spacing, the disparity provided to the superimposing information can be controlled with fine spacings, e.g., every frame.

Also, for example, disparity information is disparity information sequentially updated within a period of a predetermined number of frames during which the superimposing information is displayed, the disparity information may have added thereto information of increment periods and the number of the increment periods as the information of updating frame spacings, the image data processing unit obtaining updating points-in-time of the disparity information based on the information of increment periods and information of the number, which is information of the updating frame spacings, with a display start point-in-time of the superimposing information as a reference. In this case, the image data processing unit can sequentially obtain updating points-in-time from the display starting point-in-time of the superimposing information. For example, from a certain updating point-in-time, the next updating point-in-time by be easily obtained by adding the time of increment period x number to the certain updating point-in-time, using information of the increment period which is information of the next updating frame spacing, and information of the number.

In this way with the present technology, data of superimposing information and the disparity information are acquired from the second private data stream. Thus, superimposing information for the display content of stereoscopic image can be displayed.

Also another concept of the present technology is a reception device, including:

a data reception unit configured to receive a multiplexed data stream having a video data stream, a first private data stream, and a second private data stream;
wherein the video data stream includes left eye image data and right eye image data for displaying a stereoscopic image;
and wherein the first private data stream includes data of superimposing information to be superimposed on images according to the left eye image data and the right eye image data;
and wherein the second private data stream includes disparity information for providing disparity by shifting the superimposing information to be superimposed on images according to the left eye image data and the right eye image data, or the disparity information and data of the superimposing information;
and further including:

an information acquiring unit and
an image data processing unit;
wherein the information acquiring unit
extracts the video data stream from the multiplexed data stream received at the data reception unit, and acquires the image data included in the video data stream, and
extracts the first private data stream from the multiplexed data stream received at the data reception unit, and acquires data of the superimposing information from the first private data stream,
and wherein the image data processing unit
uses the stereoscopic image data and data of the superimposing information, acquired at the information acquiring unit, and obtains the image data on which the superimposing information has been superimposed.

With the present technology, a data reception unit receives multiplexed data stream having a video data stream, a first private data stream, and a second private data stream. An information acquiring unit acquires image data included in the video data stream and data of superimposing information is acquired from the first private data stream. An image data processing unit uses image data and data of superimposing information, and image data on which the superimposing information has been superimposed is obtained.

In this way with the present technology, data of superimposing information is acquired from the first private data stream which does not include disparity information. Reading of the disparity information impeding reception processing can be prevented. Advantageous Effects of Invention

According to the present technology, transmission of disparity information can be performed suitably so as not to prevent reception processing of a legacy 2D-compatible reception device. Brief Description of Drawings

[Fig. 1] Fig. 1 is a block diagram illustrating a configuration example of an image transmission/reception system as an embodiment of the present invention.

[Fig. 2] Fig. 2 is a block diagram illustrating a configuration example of a transmission data generating unit at a broadcasting station.

[Fig. 3] Fig. 3 is a diagram illustrating image data of a 1920 x 1080 pixel format.

[Fig. 4] Fig. 4 is a diagram for describing a "Top & Bottom" format, a "Side by Side" format, and a "Frame Sequential" format, which are transmission formats of stereoscopic image data (3D image data).

[Fig. 5] Fig. 5 is a diagram for describing an example of detecting disparity vectors in a right eye image as to a left eye image.

[Fig. 6] Fig. 6 is a diagram for describing obtaining disparity vectors by block matching format.

[Fig. 7] Fig. 7 is a diagram illustrating an example of an image in a case of using values of disparity vectors for each pixel (pixel) as luminance values of each pixel (each pixel).

[Fig. 8] Fig. 8 is a diagram illustrating an example of disparity vectors for each block (Block).

[Fig. 9] Fig. 9 is a diagram for describing downsizing processing performed at a disparity information creating unit of the transmission data generating unit.

[Fig. 10] Fig. 10 is a diagram illustrating an example of regions defined on the screens and sub regions defined in these regions, with subtitle data.

[Fig. 11] Fig. 11 is a diagram illustrating configurations of a 2D stream and a 3D extended stream that a transport stream TS has, in a "first type".

[Fig. 12] Fig. 12 is a diagram illustrating configurations of a 2D stream and a 3D stream that a transport stream TS has, in a "second type".

[Fig. 13] Fig. 13 is a diagram for describing that values of time stamps (PTS) inserted into PES headers of 2D stream (PES1(1):PES#1) and 3D extended frame (PES2(2):PES#2) are correlated in the "first type".

[Fig. 14] Fig. 14 is a diagram illustrating an example of the values of the time stamps (PTS) of the 2D stream and the 3D extended stream being set to the different values.

[Fig. 15] Fig. 15 is a diagram illustrating another example of the values of the time stamps (PTS) of the 2D stream and 3D extended stream being set to the different values.

[Fig. 16] Fig. 16 is a diagram illustrating a configuration example of the transport stream TS in the "first type".

[Fig. 17] Fig. 17 is a diagram illustrating the structure of a PCS (page_composition_segment) configuring subtitle data.

[Fig. 18] Fig. 18 is a diagram illustrating the correlation between the values of "segment_type" and segment types.

[Fig. 19] Fig. 19 is a diagram for describing information indicating the format of a newly-defined subtitle for 3D (Component_type=0x15, 0x25).

[Fig. 20] Fig. 20 is a diagram illustrating a configuration example of the transport stream TS in the "second type".

[Fig. 21] Fig. 21 is a diagram illustrating an example of updating disparity information using interval periods (Interval period) and in the case that the interval periods are fixed and that the periods are equal to the updating periods.

[Fig. 22] Fig. 22 is a diagram illustrating an example of updating disparity information using interval periods (Interval period) and the updating disparity information in a case that the interval periods are short periods.

[Fig. 23] Fig. 23 is a diagram illustrating a configuration example of 3D stream in the "second type".

[Fig. 24] Fig. 24 is a diagram illustrating an example of updating disparity information in a case of sequentially transmitting DSS segments.

[Fig. 25] Fig. 25 is a diagram illustrating an example of updating disparity information (disparity) represented as multiples of interval periods (ID: Interval Duration) with updating frame spacings serving as increment periods.

[Fig. 26] Fig. 26 is a diagram illustrating a display example of subtitles in which two regions (Region) serving as caption display areas are included in a page area (Area for Page_default).

[Fig. 27] Fig. 27 is a diagram illustrating an example of disparity information curves of regions and a page, in a case wherein both disparity information in increments of regions, and disparity information in page increment including all regions, are included in a DSS segment as disparity information (Disparity) sequentially updated during a caption display period.

[Fig. 28] Fig. 28 is a diagram illustrating what sort of structure that disparity information of a page and the regions are sent with.

[Fig. 29] Fig. 29 is a diagram (1/3) illustrating a structure example (syntax) of a DSS.

[Fig. 30] Fig. 30 is a diagram (2/3) illustrating a structure example of a DSS.

[Fig. 31] Fig. 31 is a diagram (3/3) illustrating a structure example of a DSS.

[Fig. 32] Fig. 32 is a diagram (1/4) illustrating principal data stipulations (semantics) of a DSS.

[Fig. 33] Fig. 33 is a diagram (2/4) illustrating principal data stipulations of a DSS.

[Fig. 34] Fig. 34 is a diagram (3/4) illustrating principal data stipulations of a DSS.

[Fig. 35] Fig. 35 is a diagram (4/4) illustrating principal data stipulations of a DSS.

[Fig. 36] Fig. 36 is a diagram illustrating a concept of broadcast reception in a case that a set top box and television receiver are 3D-compatible devices.

[Fig. 37] Fig. 37 is a diagram illustrating a concept of broadcast reception in a case that a set top box and television receiver are legacy 2D-compatible devices.

[Fig. 38] Fig. 38 is a diagram illustrating a display example of captions (graphics information) on an image, and perspective of background, closeup view object, and caption.

[Fig. 39] Fig. 39 is a diagram illustrating a display example of caption on a screen, and a display example of a left eye caption LGI and right eye caption RGI for displaying caption.

[Fig. 40] Fig. 40 is a block diagram illustrating a configuration example of a set top box configuring an image transmission/reception system.

[Fig. 41] Fig. 41 is a block diagram illustrating a configuration example (3D-compatible) of a bit stream processing unit configuring a set top box.

[Fig. 42] Fig. 42 is a diagram illustrating a structural example (syntax) of a multi-decoding descriptor which can be used in order to correlate a 2D stream and a 3D extended stream.

[Fig. 43] Fig. 43 is a diagram illustrating the contents of principal information (Semantics) in the structure example of the multi-decoding descriptor.

[Fig. 44] Fig. 44 is a diagram illustrating a configuration example of the transport stream TS in the "first type" in a case of situating the multi-decoding descriptor.

[Fig. 45] Fig. 45 is a block diagram illustrating another configuration example (2D-compatible) of a bit stream processing unit configuring a set top box.

[Fig. 46] Fig. 46 is a block diagram illustrating a configuration example of a television receiver configuring an image transmission/reception system.

[Fig. 47] Fig. 47 is a block diagram illustrating another configuration example of a set top box configuring an image transmission/reception system.

[Fig. 48] Fig. 48 is a block diagram illustrating another configuration example of a television receiver configuring an image transmission/reception system.

[Fig. 49] Fig. 49 is a block diagram illustrating another configuration example of an image transmission/reception system.

[Fig. 50] Fig. 50 is a diagram for describing the relation between the display position of left and right images of an object on a screen and the playing position of the stereoscopic image thereof, in stereoscopic image display using binocular disparity. Description of Embodiments

A mode for implementing the present invention (hereafter, referred to as "embodiment") will now be described. Note that description will be made in the following sequence.

1. Embodiment
2. Modifications

<1. Embodiment>

[Configuration Example of Image Transmission/Reception System]

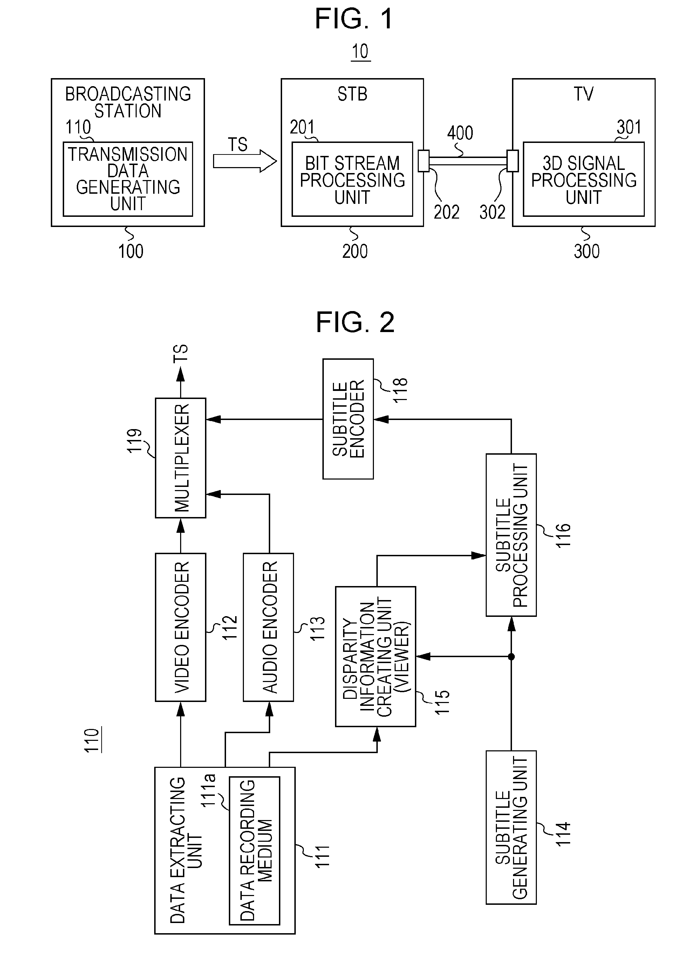

Fig. 1 illustrates a configuration example of an image transmission/reception system 10 as an embodiment. This image transmission/reception system 10 includes a broadcasting station 100, a set top box (STB) 200, and a television receiver (TV) 300.

The set top box 200 and the television receiver 300 are connected via an HDMI (High Definition Multimedia Interface) digital interface. The set top box 200 and the television receiver 300 are connected using an HDMI cable 400. With the set top box 200, an HDMI terminal 202 is provided. With the television receiver 300, an HDMI terminal 302 is provided. One end of the HDMI cable 400 is connected to the HDMI terminal 202 of the set top box 200, and the other end of this HDMI cable 400 is connected to the HDMI terminal 302 of the television receiver 300.

[Description of Broadcasting Station]

The broadcasting station 100 transmits a transport stream TS by carrying this on broadcast waves. The broadcasting station 100 has a transmission data generating unit 110 which generates the transport stream TS. This transport stream TS includes stereoscopic image data, audio data, superposition information data, disparity information, and so forth. The stereoscopic image data has a predetermined transmission format, and has left eye image data and right eye image data for displaying a stereoscopic image. Here, the superposition information generally includes captions, graphics information, text information, and so forth, but in this embodiment is captions.

[Configuration Example of Transmission Data Generating Unit]

Fig. 2 illustrates a configuration example of the transmission data generating unit 110 of the broadcasting station 100. This transmission data generating unit 110 transmits disparity information (disparity vectors) in a data structure which is readily compatible with the DVB (Digital Video Broadcasting) format which is an existing broadcasting standard. The transmission data generating unit 110 includes a data extracting unit 111, a video encoder 112, and an audio encoder 113. The transmission data generating unit 110 also has a subtitle generating unit 114, a disparity information creating unit 115, a subtitle processing unit 116, a subtitle encoder 118, and a multiplexer 119.

A data recording medium 111a is, for example detachably mounted to the data extracting unit 111. This data recording medium 111a has recorded therein, along with stereoscopic image data including left eye image data and right eye image data, audio data and disparity information, in a correlated manner. The data extracting unit 111 extracts, from the data recording medium 111a, the stereoscopic image data, audio data, disparity information, and so forth, and outputs this. The data recording medium 111a is a disc-shaped recording medium, semiconductor memory, or the like.

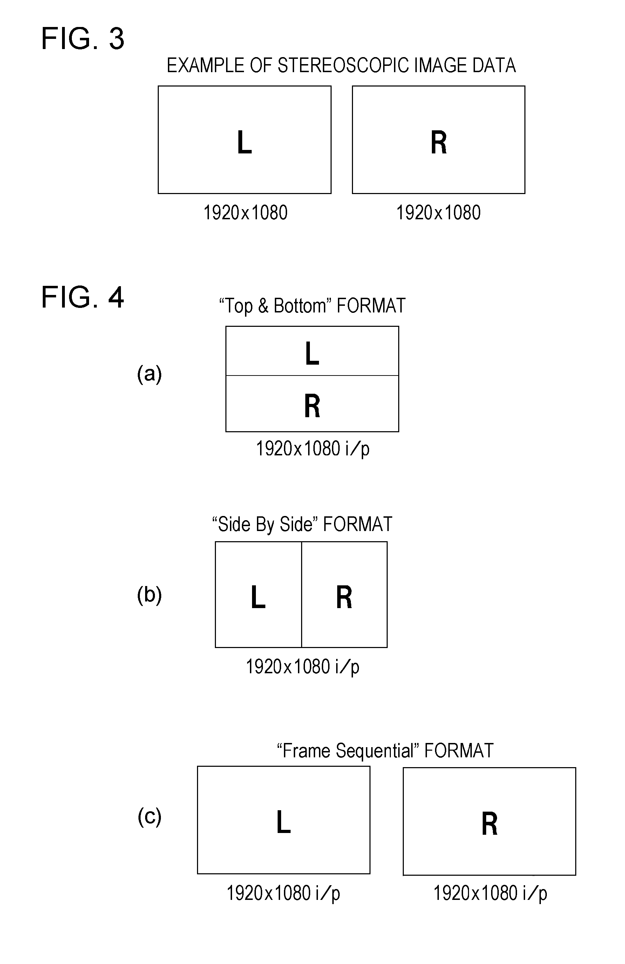

The stereoscopic image data recorded in the data recording medium 111a is stereoscopic image data of a predetermined transmission format. An example of the transmission format of stereoscopic image data (3D image data) will be described. While the following first through third methods are given as transmission methods, transmission methods other than these may be used. Here, as illustrated in Fig. 3, description will be made regarding a case where each piece of image data of the left eye (L) and the right eye (R) is image data with determined resolution, e.g., a pixel format of 1920 x 1080, as an example.

The first transmission method is a top & bottom (Top & Bottom) format, and is, as illustrated in Fig. 4(a), a format for transmitting the data of each line of left eye image data in the first half of the vertical direction, and transmitting the data of each line of left eye image data in the second half of the vertical direction. In this case, the lines of the left eye image data and right eye image data are thinned out to 1/2, so the vertical resolution is reduced to half as to the original signal.

The second transmission method is a side by side (Side By Side) format, and is, as illustrated in Fig. 4(b), a format for transmitting pixel data of the left eye image data in the first half of the horizontal direction, and transmitting pixel data of the right eye image data in the second half of the horizontal direction. In this case, the left eye image data and right eye image data each have the pixel data thereof in the horizontal direction thinned out to 1/2, so the horizontal resolution is reduced to half as to the original signal.

The third transmission method is a frame sequential (Frame Sequential) format, and is, as illustrated in Fig. 4(c), a format for transmitting left eye image data and right eye image data by sequentially switching these for each frame. This frame sequential format is also sometimes called full frame (Full Frame) or service compatible (service compatible) format as to the conventional 2D format.

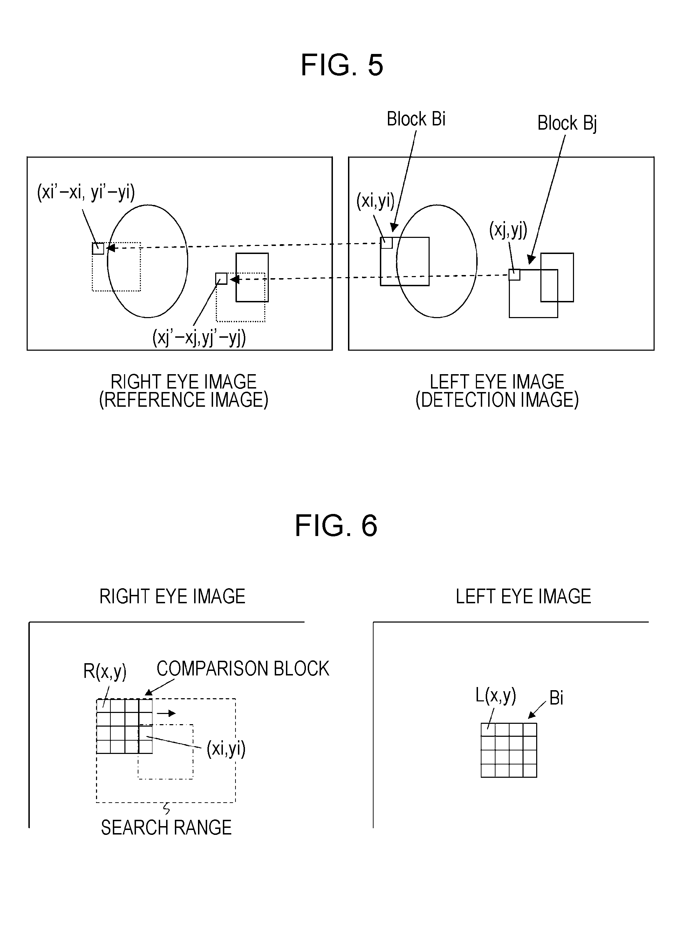

The disparity information recorded in the data recording medium 111a is disparity vectors for each of pixels (pixels) configuring an image, for example. A detection example of disparity vectors will be described. Here, an example of detecting a disparity vector of a right eye image as to a left eye image will be described. As illustrated in Fig. 5, the left eye image will be taken as a detection image, and the right eye image will be taken as a reference image. With this example, disparity vectors in the positions of (xi, yi) and (xj, yj) will be detected.

Description will be made regarding a case where the disparity vector in the position of (xi, yi) is detected, as an example. In this case, a pixel block (disparity detection block) Bi of, for example, 4 x 4, 8 x 8, or 16 x 16 with the pixel position of (xi, yi) as upper left is set to the left eye image. Subsequently, with the right eye image, a pixel block matched with the pixel block Bi is searched.

In this case, a search range with the position of (xi, yi) as the center is set to the right eye image, and comparison blocks of, for example, 4 x 4, 8 x 8, or 16 x 16 as with the above pixel block Bi are sequentially set with each pixel within the search range sequentially being taken as the pixel of interest.

Summation of the absolute value of difference for each of the corresponding pixels between the pixel block Bi and a comparison block sequentially set is obtained. Here, as illustrated in Fig. 6, if we say that the pixel value of the pixel block Bi is L(x, y), and the pixel value of a comparison block is R(x, y), the summation of the difference absolute value between the pixel block Bi and the certain comparison block is represented with $\sum | L(x, y) - R(x, y) |$.

When n pixels are included in the search range set to the right eye image, finally, n summations S1 through Sn are obtained, of which the minimum summation Smin is selected. Subsequently, the position (xi', yi') of an upper left pixel is obtained from the comparison block from which the summation Smin has been obtained. Thus, the disparity vector in the position of (xi, yi) is detected as (xi' - xi, yi' - yi) in the position of (xi, yi). Though detailed description will be omitted, with regard to the disparity vector in the position (xj, yj) as well, a pixel block Bj of, for example, 4 x 4, 8 x 8, or 16 x 16 with the pixel position of (xj, yj) as upper left is set to the left eye image, and detection is made in the same process.

The video encoder 112 subjects the stereoscopic image data extracted by the data extracting unit 111 to encoding such as MPEG4-AVC, MPEG2, VC-1, or the like, and generates a video data stream (video elementary stream). The audio encoder 113 subjects the audio data extracted by the data extracting unit 111 to encoding such as AC3, AAC, or the like, and generates an audio data stream (audio elementary stream).

The subtitle generating unit 114 generates subtitle data which is DVB (Digital Video Broadcasting) format caption data. This subtitle data is subtitle data for two-dimensional images. The subtitle generating unit 114 configures a superimposing information data output unit.

The disparity information creating unit 115 subjects the disparity vector (horizontal direction disparity vector) for each pixel (pixel) extracted by the data extracting unit 111 to downsizing processing, and generates disparity information of each hierarchy as shown hereinafter. Note that the disparity information does not necessarily have to be generated at the disparity information creating unit 115, and a configuration where this is externally supplied may be made.

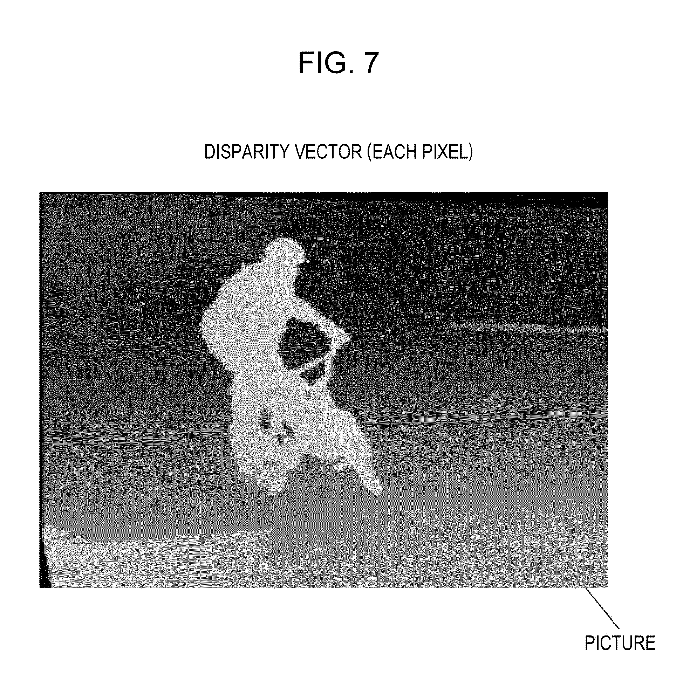

Fig. 7 illustrates an example of data in the relative depth direction to be given such as the luminance value of each pixel (pixel). Here, the data in the relative depth direction can be handled as a disparity vector for each pixel by predetermined conversion. With this example, the luminance values of a person portion are high. This means that the value of a disparity vector of the person portion is great, and accordingly, with stereoscopic image display, this means that this person portion is perceived to be in a state of being closer. Also, with this example, the luminance values of a background portion are low. This means that the value of a disparity vector of the background portion is small, and accordingly, with stereoscopic image display, this means that this background portion is perceived to be in a state of being farther away.

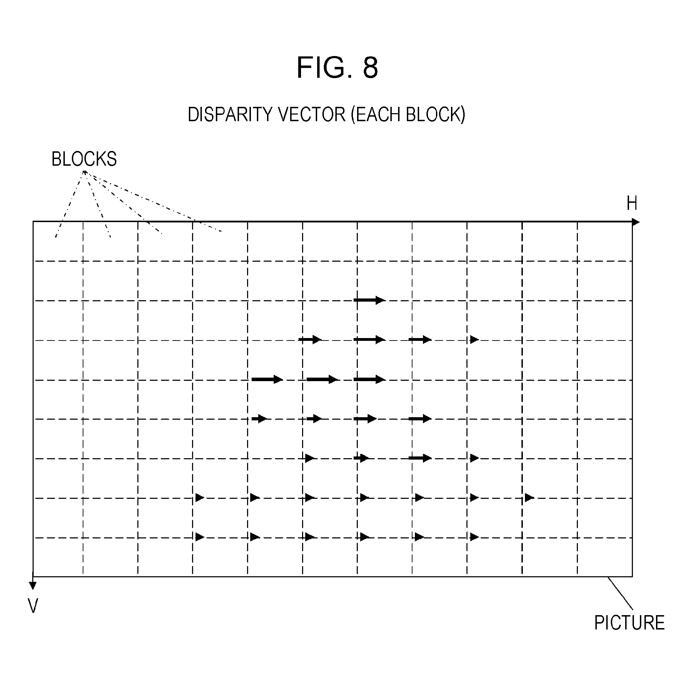

Fig. 8 illustrates an example of the disparity vector for each block (Block). The block is equivalent to the upper layer of pixels (pixels) positioned in the lowermost layer. This block is configured by an image (picture) area being divided with predetermined sizes in the horizontal direction and the vertical direction. The disparity vector of each block is obtained, for example, by a disparity vector of which the value is the greatest being selected out of the disparity vectors of all the pixels (pixels) existing within the block thereof. With this example, the disparity vector of each block is illustrated by an arrow, and the length of the arrow corresponds to the size of the disparity vector.

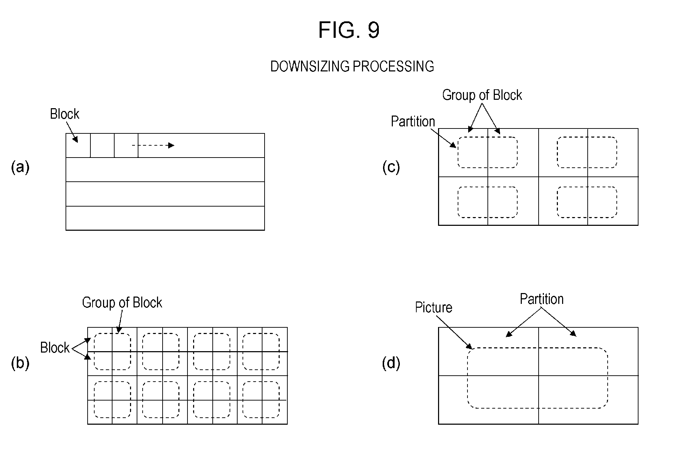

Fig. 9 illustrates an example of the downsizing processing to be performed at the disparity information creating unit 115. First, the disparity information creating unit 115 uses, as illustrated in (a) in Fig. 9, the disparity vector for each pixel (pixel) to obtain the disparity vector with a sign for each block. As described above, the block is equivalent to the upper layer of pixels (pixels) positioned in the lowermost layer, and is configured by an image (picture) area being divided with predetermined sizes in the horizontal direction and the vertical direction. The disparity vector of each block is obtained, for example, by a disparity vector having the negative value of which the value is the smallest, or the absolute value is the greatest, being selected out of the disparity vectors of all the pixels (pixels) existing within the block thereof.

Next, the disparity information creating unit 115 uses, as illustrated in (b) in Fig. 9, the disparity vector for each block to obtain the disparity vector for each group (Group Of Block). The group is equivalent to the upper layer of blocks, and is obtained by collectively grouping multiple adjacent blocks. With the example in (b) in Fig. 9, each group is made up of four blocks bundled with a dashed-line frame. Subsequently, the disparity vector of each group is obtained, for example, by a disparity vector having the negative value of which the value is the smallest, or the absolute value is the greatest, being selected out of the disparity vectors of all the blocks within the group thereof.

Next, the disparity information creating unit 115 uses, as illustrated in (c) in Fig. 9, the disparity vector for each group to obtain the disparity vector for each partition (Partition). The partition is equivalent to the upper layer of groups, and is obtained by collectively grouping multiple adjacent groups. With the example in (c) in Fig. 9, each partition is made up of two groups bundled with a dashed-line frame. Subsequently, the disparity vector of each partition is obtained, for example, by a disparity vector having the negative value of which the value is the smallest, or the absolute value is the greatest, being selected out of the disparity vectors of all the groups within the partition thereof.

Next, the disparity information creating unit 115 uses, as illustrated in (d) in Fig. 9, the disparity vector for each partition to obtain the disparity vector of the entire picture (entire image) positioned in the uppermost layer. With the example in (d) in Fig. 9, the entire picture includes four partitions bundled with a dashed-line frame. Subsequently, the disparity vector of the entire picture is obtained, for example, by a disparity vector having the negative value of which the value is the smallest, or the absolute value is the greatest being selected out of the disparity vectors of all the partitions included in the entire picture.

In this way, the disparity information creating unit 115 subjects the disparity vector for each pixel (pixel) positioned in the lowermost layer to downsizing processing, whereby the disparity vector of each area of each hierarchy of a block, group, partition, and the entire picture can be obtained. Note that, with an example of downsizing processing illustrated in Fig. 9, eventually, in addition to the hierarchy of pixels (pixels), the disparity vectors of the four hierarchies of a block, group, partition, and the entire picture are obtained, but the number of hierarchies, how to partition the area of each hierarchy, and the number of areas are not restricted to this example.

Returning to Fig. 2, the subtitle processing unit 116 can define the regions of sub regions in a region, based on the subtitle data generated at the subtitle generating unit 114. Also, the subtitle processing unit 116 sets disparity information for performing shift adjustment of the display position of the superimposing information in the left eye image and right eye image, based on the disparity information created at the disparity information creating unit 115. This disparity information can be set each sub region or region, or each page.

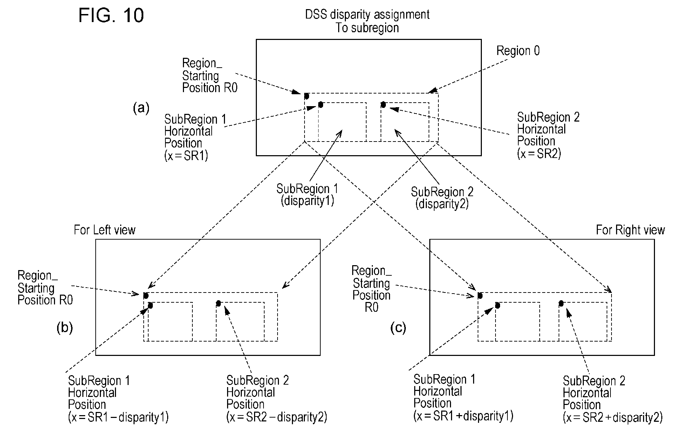

Fig. 10(a) illustrates an example of regions defined on the screen and sub regions defined within this region, in sub title data. With this example, two sub regions of "SubRegion 1" and "Subregion 2" are defined in the region 0 (Region0) where "Region_Starting Position" is RO. The position in the horizontal direction (Horizontal Position)x of (SubRegion 1) is SR1, and the position in the horizontal direction (Horizontal Position)x of (SubRegion 2) is SR2. With this example, disparity information "disparity 1" is set as to the sub region "SubRegion 1", and disparity information "disparity 2" is set as to the sub region "SubRegion 2".

Fig. 10(b) illustrates an example of shift adjustment within sub region regions in the left eye image by the disparity information. Disparity information "disparity 1" is set as to the sub region "SubRegion 1". Therefore, the position in the horizontal direction (Horizontal Position)x is subjected to shift adjustment so as to be SR1-disparity 1, regarding the sub region "SubRegion 1". Also, disparity information "disparity 2" is set as to the sub region "SubRegion 2". Therefore, the position in the horizontal direction (Horizontal Position)x is subjected to shift adjustment so as to be SR2-disparity 2, regarding the sub region "SubRegion 2".

Fig. 10(c) illustrates an example of shift adjustment within sub regions in the right eye image according to disparity information. Disparity information "disparity 1" is set as to the sub region "SubRegion 1". Therefore, the position in the horizontal direction (Horizontal Position)x is subjected to shift adjustment so as to be SR1+disparity 1, in the reverse direction of the above-described left eye image, as to the sub region "SubRegion 1". Also, disparity information "disparity 2" is set as to the sub region "SubRegion 2". Therefore, the position in the horizontal direction (Horizontal Position)x is subjected to shift adjustment so as to be SR2+disparity 2, in the reverse direction of the above-described left eye image, regarding the sub region "SubRegion 2".

The subtitle processing unit 116 outputs display control information such as region information, disparity information, or the like in the above sub regions, along with the subtitle data generated at the subtitle generating unit 114. Note that the disparity information can be set in increments of sub regions as described above, and also can be set in increments of regions, or in increments of pages.

The subtitle data has segments such as DDS, PCS, RCS, CDS, ODS, and EDS. DDS (display definition segment) instructs the size of display for HDTV (display). PCS (page composition segment) instructs the position of a region (region) within a page (page). RCS (region composition segment) instructs the size of the region (Region) and the encoding mode of an object (object), and also instructs the start position of the object (object).

CDS (CLUT definition segment) instructs the content of a CLUT. ODS (objectdata segment) includes encoded pixel data (Pixeldata). EDS (end of display set segment) indicates the end of subtitle data starting from a DDS segment. With this embodiment, the DSS segment (Display Signaling Segment) is further defined. The above described display control information is inserted into this DSS segment.

Returning to Fig. 2, the subtitle encoder 118 generates the first and second private data stream (the first and second subtitle data stream), with the following "first type" or "second type".

In the "first type", the first private data stream (2D stream) including segments of DDS, PCS, RCS, CDS, ODS, and EDS is generated. Also, with this "first type", the second private data stream (3D extended stream) including segments of DDS, DSS, and EDS is generated. In the "second type", the first private data stream (2D stream) including segments of DDS, PCS, RCS, CDS, ODS, and EDS is generated. Also, with this "second type", the second private data stream (3D stream) including segments of DDS, PCS, RCS, DSS, CDS, ODS and EDS is generated.

The multiplexer 119 multiplexes the data streams from the video encoder 112, audio encoder 113, and subtitle encoder 118, and obtains transport stream TS as a multiplexed data stream. This transport stream TS has a video data stream, an audio data stream, the first and second private data stream as a PES (Packetized Elementary Stream) stream.

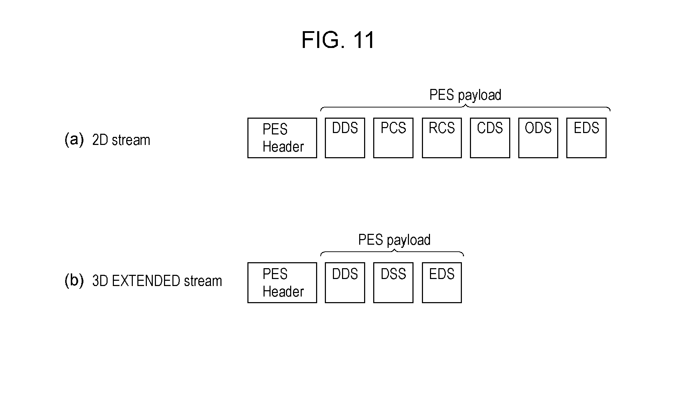

Fig. 11 illustrates configurations of the first private data stream (2D stream) and second private data stream (3D extended stream) that the transport stream TS has in the "first type". Fig. 11(a) illustrates the 2D stream, where a PES header (PES header) is situated at the head, and after that, PES payload (PES Payload) including the segments of DDS, PCS, RCS, CDS, ODS, and EDS is situated. Also, Fig. 11(b) illustrates the 3D extended stream, a PES header (PES header) is situated at the head, and after that, PES payload (PES Payload) including the segments of DDS, DSS, and EDS is situated.

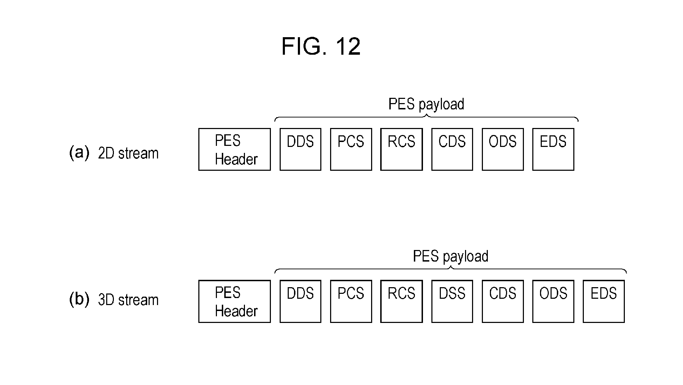

Fig. 12 illustrates configurations of the first private data stream (2D stream) and second private data stream (3D stream) that the transport stream TS has in the "second type". Fig. 12(a) illustrates the 2D stream, where a PES header (PES header) is situated at the head, and after that, PES payload (PES Payload) including the segments of DDS, PCS, RCS, CDS, ODS, and EDS is situated. Also, Fig. 12(b) illustrates the 3D stream, a PES header (PES header) is situated at the head, and after that, PES payload (PES Payload) including the segments of DDS, PCS, RCS, DSS, CDS, ODS, and EDS is situated.

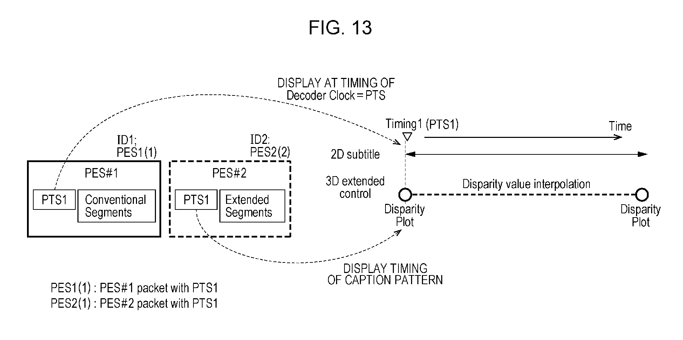

The multiplexer 119, in the "first type", includes synchronization information for synchronizing display by data of the superimposing information and shift control according to disparity information (Disparity) at the reception side, to the 2D stream and 3D extended stream. Specifically, with the multiplexer 119, as shown in Fig. 13, values of the time stamps (PTS: Presentation Time Stamp) inserted into the PES header of the 2D stream (PES1(1):PES#1) and 3D extended stream (PES2(2):PES#2) are correlated.

Fig. 13 illustrates an example of the values of the time stamps (PTS) of the 2D stream and 3D extended stream being the same vales, i.e. being set to PTS1. In this case, with the reception side (decoding side), display of the caption pattern according to subtitle data (data of superimposing information) is started from the PTS1, and shift control according to disparity information for the caption pattern being 3D display is also started from the PTS1.

Note that the example of Fig. 13 indicates that two piece of disparity information of disparity information in the PTS1 frame and disparity information in the following predetermined frame are included in the 3D extended stream. This illustrates that, at the reception side (decoding side), disparity information of arbitrary frames between these two frames can be performed by interpolation processing and performing shift control in a dynamic manner.

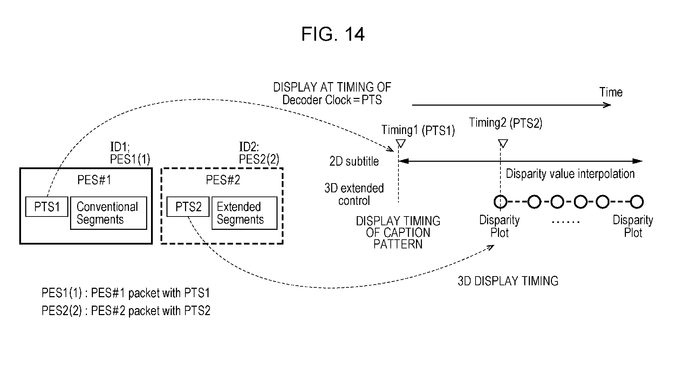

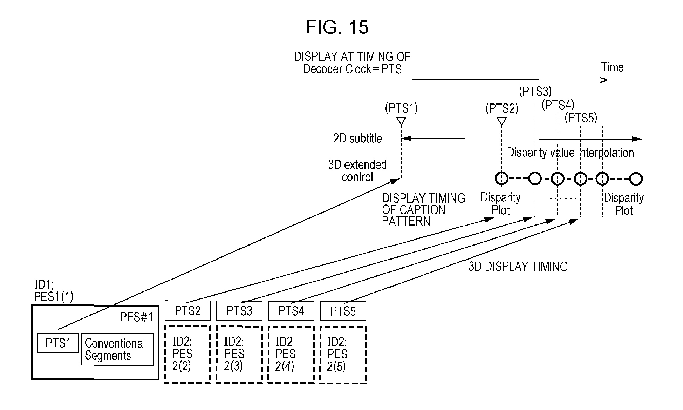

Also, with Fig. 13, "Conventional Segments" included in the 2D stream means each segment of DDS, PCS, RCS, CDS, ODS, and EDS. Also, "Extended Segments" included in the 3D extended stream means each segments of DDS, DSS, and EDS. Also, with Fig. 13, "Elementary_PID" of the 2D stream is ID1 and "Elementary_PID" of the 3D extended stream is ID2. This is also the same as the following Fig. 14 and Fig. 15.

Fig. 14 illustrates an example of the values of the time stamps (PTS) of the 2D stream and 3D extended stream being set to the different values. That is to say, with the example of Fig. 13, an example is illustrated where the value of the time stamps (PTS) of the 2D stream is set in PTS1, and the value of the time stamps (PTS) of the 3D extended stream is set in the following PTS2 after PTS1. In this case, with the reception side (decoding side), display of the caption pattern by the subtitle data (data of superimposing information) will be started from PTS1, and shift control according to disparity information for the caption pattern being 3D display will be started from PTS2.

Note that the example in Fig. 14 indicates disparity information of the frame of PTS2 and the disparity information of the subsequent multiple frames in the 3D extended stream. This illustrates that at the reception side (decoding side), obtaining of disparity information of arbitrary frames between these multiple frames by interpolation processing and performing shift control in a dynamic manner is enabled.

Fig. 15, in the same way as Fig. 14, illustrates an example of the values of the time stamps (PTS) of the 2D stream and 3D extended stream being set to different values and moreover, multiple 3D extended streams where the values of which the time stamps (PTS) are different exist. That is to say, with the example of Fig. 15, the value of the time stamp (PTS) of the 2D stream is set in PTS1. Also, the values of the type stamps (PTS) of the multiple 3D extended frames are set to PTS2, PTS3, PTS4, ... which are later from PTS1.

In this case, with the reception side (decoding side), display of the caption pattern according to subtitle data (data of the superimposing information) is started from PTS1. Also, shift control according to disparity information for the caption pattern being 3D display is started from PTS2 and is then updated sequentially. Note that, with the example of Fig. 15, only disparity information of the frame indicated by each time stamp is included in the multiple 3D extended streams, and it is illustrated that at the reception side (decoding side), obtaining of disparity information of any frames among these multiple frames by interpolation processing and performing shift control in a dynamic manner is enabled.

The operations of the transmission data generating unit 110 shown in Fig. 2 will be briefly described. The stereoscopic image data extracted by the data extracting unit 111 is supplied to the video encoder 112. At this video encoder 112, encoding is performed on the stereoscopic image data such as MPEG4-AVC, MPEG2, VC-1, or the like, and a video data stream including the encoded video data is generated. The video data stream is supplied to the multiplexer 119.

The audio data extracted at the data extracting unit 111 is supplied to the audio encoder 113. This audio encoder 113 subjects the audio data to encoding such as MPEG-2 Audio AAC, or MPEG-4 AAC or the like, generating an audio data stream including the encoded audio data. The audio data stream is supplied to the multiplexer 119.

At the subtitle generating unit 114, subtitle data (for two-dimensional images) which is DVB caption data is generated. This subtitle data is supplied to the disparity information creating unit 115 and the subtitle processing unit 116.

Disparity vectors for each pixel (pixel) extracted by the data extracting unit 111 are supplied to the disparity information creating unit 115. With this disparity information creating unit 115, downsizing processing is performed as to the disparity vector as to each pixel, or multiple pixels, and disparity information (disparity) of each hierarchical level is created. This disparity information is supplied to the subtitle processing unit 116.

With the subtitle processing unit 116, for example, the region of the sub region is defined within the region, based on the subtitle data generated at the subtitle generating unit 114. Also, with the subtitle processing unit 116, disparity information for performing shift adjustment of the display position of the superimposing information in a left eye image and right eye image is set, based on the disparity information created at the disparity information creating unit 115. In this case, the disparity information is set each sub region or region, or each page.

Subtitle data and display control information output from the subtitle processing unit 116 are supplied to the subtitle encoder 118. With the display control information, region information, disparity information, and so forth in the sub region region are included. With this subtitle encoder 118, the first and second private data streams (elementary stream) are generated by "the first type" or "second type".

In the "first type", the first private data stream (2D stream) including the segments of DDS, PCS, RCS, CDS, ODS, and EDS are generated. Furthermore, with this "first type", the second private data stream (3D extended stream) including the segments of DDS, DSS, and EDS are generated. In the "second type", the first private data stream (2D stream) including the segments of DDS, PCS, RCS, CDS, ODS, and EDS are generated. Furthermore, with this "second type", the second private data stream (3D stream) including the segments of DDS, PCS, RCS, DSS, CDS, ODS, and EDS are generated. As described above, a segment of DSS is a segment including the display control information.

As described above, the multiplexer 119 is supplied with the data streams from the video encoder 112, audio encoder 113, and subtitle encoder 118. At this multiplexer 119, the data streams are PES packetized and multiplexed, thereby obtaining transport stream TS as multiplexed data stream. This transport stream TS has the first and second private data stream, besides a video data stream and audio data stream, as a PES stream.

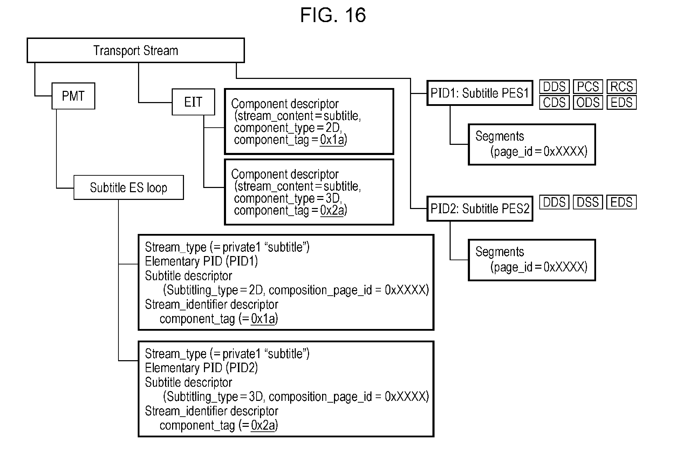

Fig. 16 illustrates a configuration example of the transport stream TS in the "first type". Note that with this diagram, for simplification of the diagram, illustration of portions relating to video and audio is omitted from illustration. This transport stream TS includes PES packets obtained by packetizing the elementary streams.

With this configuration example, PES packet "Subtitle PES1" of the 2D stream (first private data stream) and PES packet "Subtitle PES2" of the 3D extended stream (second private data stream) are included. The segments of DDS, PCS, RCS, CDS, ODS, and EOS are included in the 2D stream (PES stream). With the 3D extended stream (PES stream), the segments of DDS, DSS, and EDS are included. In this case, "Elementary_PID"s of the 2D stream and 3D extended stream are set so as to be different, such as PID1 and PID2, thereby indicating that these streams are different streams.

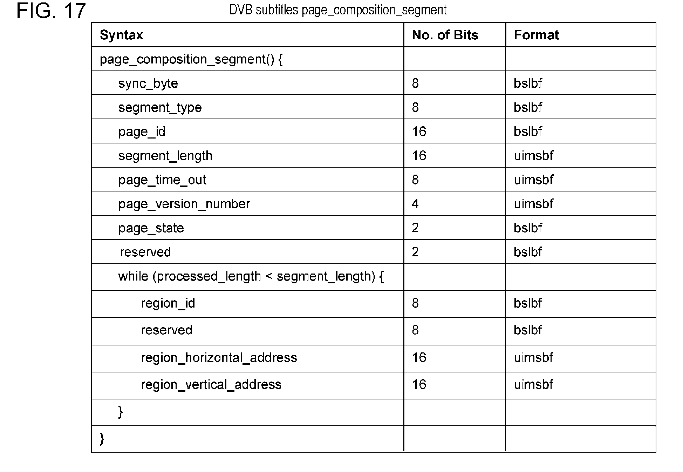

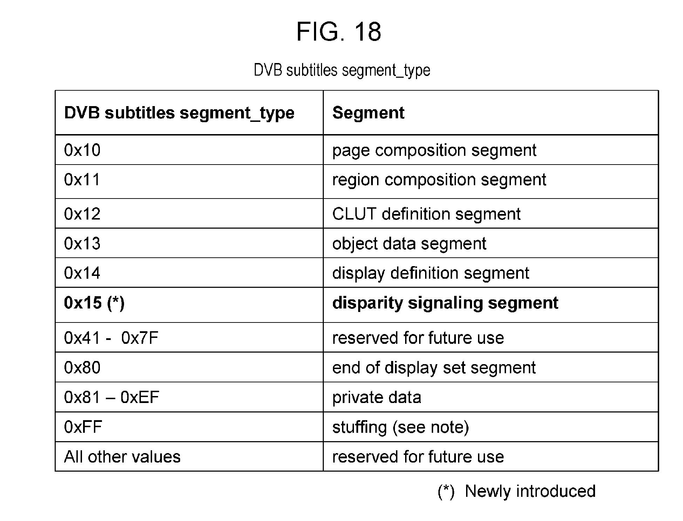

Fig. 17 illustrates the structure of a PCS (page_composition_segment). As shown in Fig. 18, the segment type of this PCS is "0x10". "region_horizontal address" and "region_vertical_address" indicate the start position of a region (region). Note that illustration of the structure of other segments such as DDS, RCS, ODS, and so forth, will be omitted from the drawings. As shown in Fig. 18, the segment type of DDS is "0x14", the segment type of RCS is "0x11", the segment type of CDS is "0x12", the segment type of ODS is "0x13" and the segment type of EDS is "0x80". Further, as shown in Fig. 18, the segment type of DSS is "0x15". The detailed structure of this DSS segment will be described later.

Returning to Fig. 16, the transport stream TS includes a PMT (Program Map Table) as PSI (Program Specific Information). This PSI is information describing to which program each elementary stream included in the transport stream belongs. Also, the transport stream includes an EIT (Event Information Table) as SI (Serviced Information) regarding which management is performed in increments of events.
Metadata in increments of programs is described in the EIT.

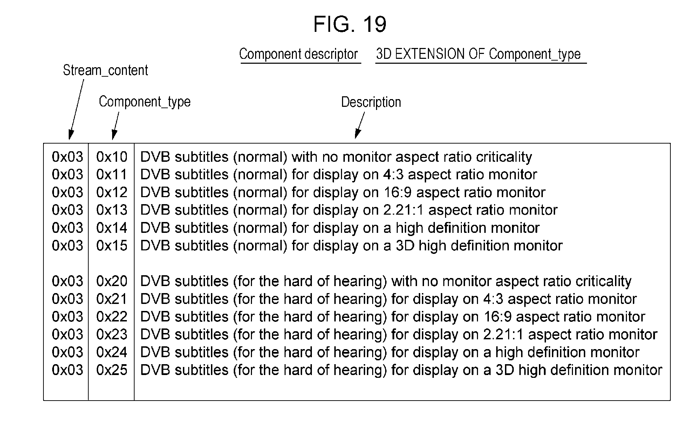

A subtitle descriptor (Subtitle descriptor) indicating the content of the subtitle is inserted beneath a PMT. Also, a component descriptor (Component_Descriptor) indicating the delivery content is inserted beneath an EIT, for every stream. As shown in Fig. 19, in the event that "stream_content" of the component descriptor indicates subtitles (subtitle), when "component_type" "is "0x15" or "0x25" this indicates subtitles for 3D, and when another value this indicates subtitles for 2D. As shown in Fig. 16, the values of "subtitling_type" of the subtitle descriptor are set to be the same values as "component_type".

Also a subtitle elementary loop having information relating to subtitle elementary stream exists in this PMT. This subtitle elementary loop has disposed therein information such as packet identifier (PID) and the like for each stream, and also while not shown in the drawings, a descriptor (descriptor) describing information relating to the elementary stream is also disposed therein.

In the case of the "first type", "composition_page_id" of the subtitle descriptor is set so as to show that the segments included in the 3D extended stream are related to the segments of the 2D stream. That is to say, "composition_page_id" is set so as to share the same value ("0xXXXX" in the drawing) with the 3D extended stream and 2D stream. Also in the case of this "first type", "page_id" of the relating segments are encoded so as to have the same values in both streams in order to indicate the segments included in the 3D extended stream are related to the segments of the 2D stream.

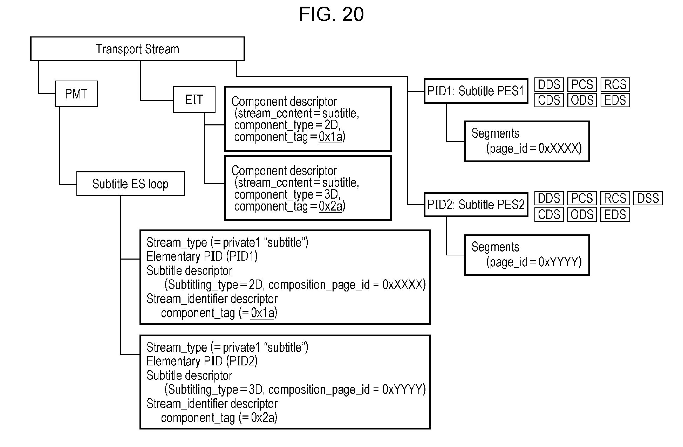

Fig. 20 illustrates a configuration example of transport streams TS in the "second type". Note that in this diagram as well, for simplification of the diagram, illustration of portions relating to video and audio is omitted. This transport stream TS includes PES packets obtained by packetizing the elementary streams.

With this configuration example, PES packet "Subtitle PES1" of the 2D stream (the first private data stream) and PES packet "Subtitle PES2" of the 3D stream (the second private data stream) are included. The segments of DDS, PCS, RCS, CDS, ODS, and EDS are included in the 2D stream (PES stream). The segments of DDS, PCS, RCS, DSS, CDS, ODS, and EDS are included in the 3D stream (PES stream).

In the case of the "second type," the 3D stream is made up of a segment of DSS being inserted into 2D stream. That is to say, all information necessary to display 3D-compatible are included in this 3D stream. In this case, "Elementary_PID"s of the 2D stream and 3D stream are set to be different such as PID1 and PID2, thereby indicating that these streams are different streams. Also, in the case of this "second type", different values ("0xXXXX" and "0xYYYY" in the drawing) are set in "composition_page_id" in the subtitle descriptor in the 3D stream and 2D stream.

[Updating of Disparity Information]

As described above, disparity information is transmitted by the 3D extended stream with the "first type", and disparity information is transmitted by the 3D stream with the "second type". Updating of this disparity information will be described.

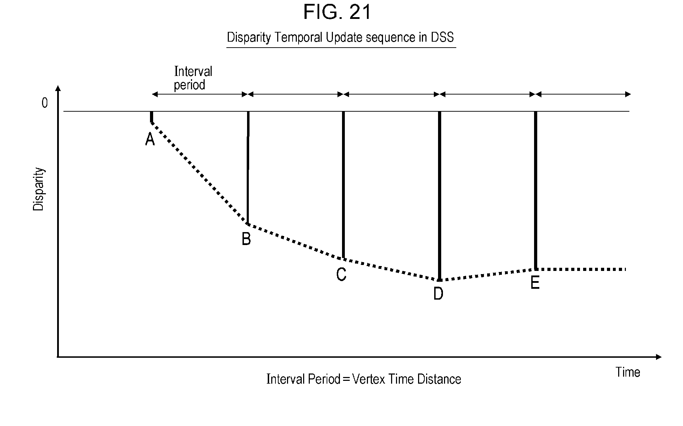

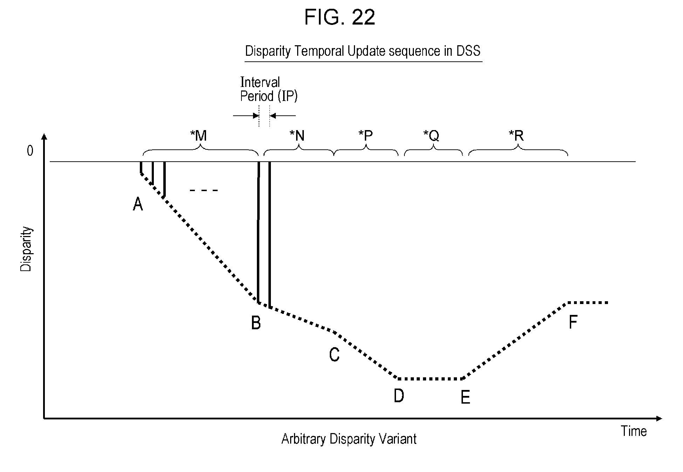

Fig. 21 and Fig. 22 indicate an example of updating disparity information using an interval period (Interval period). Fig. 21 is a diagram illustrating a case where the interval period (Interval period) is fixed, and moreover the period is equal to the updating period. That is to say, each updating period of A-B, B-C C-D, ... is made up of one interval period.

Fig. 22 is a diagram illustrating an example of updating disparity information in a case where the interval period (Interval period) is a short period (e.g., may be a frame cycle) with a general arrangement. In this case, numbers of the interval period is M, N, P, Q, R at each updating period. Note that in Fig. 21 and Fig. 22, "A" indicates the start frame of the caption display period (start point), and "B" through "F" indicate subsequent updating frames (updating points).

In the event that disparity information sequentially updated within a caption display period is transmitted to the reception side (the set top box 200 or the like), by performing interpolation processing on the disparity information each updating period at the reception side, disparity information at arbitrary frame spacings, one frame spacings for example, can be generated and used.

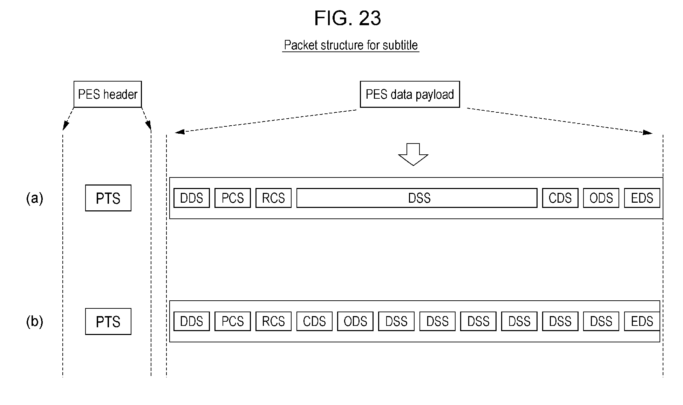

Fig. 23 illustrates a configuration example of the 3D stream in the "second type". Fig. 23(a) illustrates an example in which only one segment of DSS is inserted. The PES header includes time information (PTS). Also, the segments of DDS, PCS, RCS, DSS, CDS, ODS, and EDS are included as PES payload data. These are transmitted in batch before the subtitle display period starts. Multiple disparity information sequentially updated in the caption display period are included in this one DSS segment.

Note that this multiple disparity information may be sent to the reception side (the set top box 200 or the like) without including multiple disparity information sequentially updated in the caption display period in one DSS segment. In this case, a DSS segment is inserted into the 3D stream each timing that updating is performed.

Fig. 23(b) illustrates a configuration example of the 3D stream in such a case. First, the segments of DDS, PCS, RCS, CDS, ODS, and EDS are transmitted as PES payload data. Subsequently, at a timing of performing updating, a predetermined number of DSS segments for disparity information updating are transmitted. Finally, an EDS segment is also transmitted with the DSS segments.

Note that Fig. 23 indicated a configuration example of the 3D stream in the "second type", but, with the 3D extended stream in the "first type" as well, a similar configuration may be made. That is to say, a segment of one DSS is inserted into the 3D extended frame, and multiple disparity information sequentially updated in the caption display period can be included in this DSS segment. Alternatively, a DDS segment is inserted into the 3D extended frame every timing when performing updating disparity information.

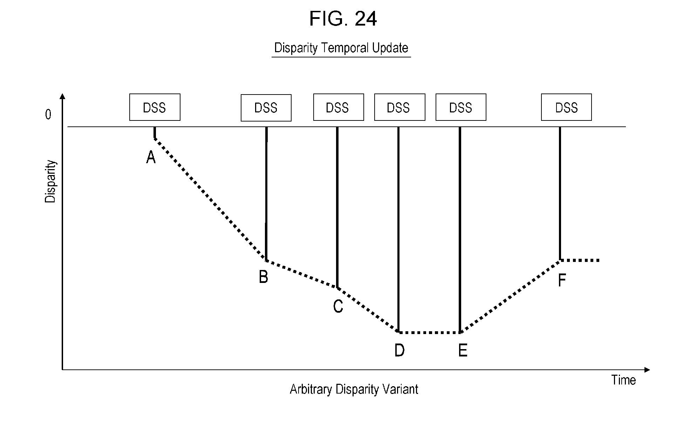

Fig. 24 illustrates an updating example of disparity information in a case of sequentially transmitting DSS segments as described above. Note that in Fig. 24, "A" indicates the start frame of the caption display period (start point), and "B" through "F" indicate subsequent updating frames (updating points).

In the case of sequentially transmitting DSS segments and sending disparity information sequentially updated during the caption display period to the reception side (set top box 200 or the like) as well, the same processing as described above can be performed at the reception side. That is to say, in this case as well, by performing interpolation processing on the disparity information each updating period at the reception side, disparity information at arbitrary frame spacings, one frame spacings for example, can be generated and used.

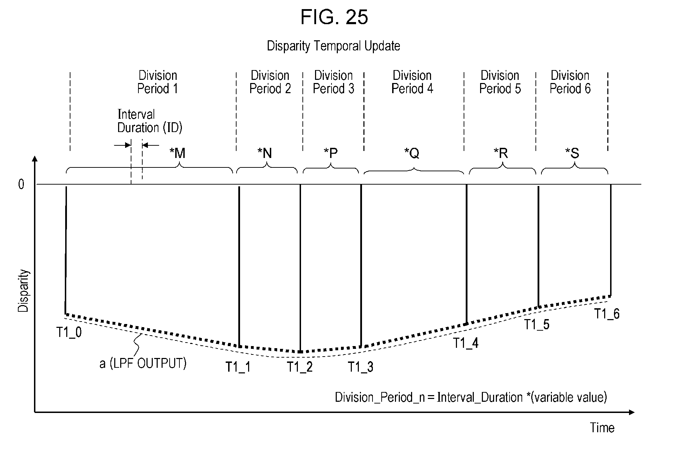

Fig. 25 illustrates an example of updating disparity information (disparity), the same as with Fig. 22 described above. The updating frame spacing is represented as a multiple of an interval period (ID: Interval Duration) serving as an increment period. For example, an updating frame spacing "Division Period 1" is represented as "ID*M", an updating frame spacing "Division Period 2" is represented as "ID*N", and so on for the subsequent updating frame spacings. With the updating example of disparity information shown in Fig. 25, the updating frame spacings are not fixed, and the updating frame spacings are set in accordance with the disparity information curve.

Also, in an example of updating this disparity information (disparity), at the reception side, a start frame of the caption display period (start point-in-time) T1_0 0 is provided as a PTS (Presentation Time Stamp) inserted in the header of a PES stream where this disparity information is provided. At the reception side, each updating point-in-time of disparity information is obtained based on the interval period information which is information of each updating frame spacing (increment period information) and information of the number of the interval periods.

In this case, the updating points-in-time are sequentially obtained from the start frame of the caption display period (start point-in-time) T1_0, based on the following Expression (1). In this Expression (1), "interval_count" indicates the number of interval periods, which is a value equivalent to M, N, P, Q, R, and S in Fig. 25. Also, in this Expression (1), "interval_time" is a value equivalent to the interval period (ID) in Fig. 25.

$$Tm\_n = Tm\_(n-1) + (interval\_time * interval\_count) \cdots(1)$$

For example, in the updating example shown in Fig. 25, the updating points-in-time are obtained as follows based on this Expression (1). That is to say, the updating point-in-time T1_1 is obtained as "T1_1 = T1_0 + (ID * M)", using the start point-in-time (T1_0), interval period (ID), and number (M). Also, the updating point-in-time T1_2 is obtained as "T1_2 = T1_1 + (ID * N)", using the updating point-in-time (T1_1), interval period (ID), and number (N). The subsequent updating points-in-time are also obtained in the same way.

In the updating example shown in Fig. 25, at the reception side, interpolation processing is performed regarding the disparity information sequentially updated during the caption display period, generating and using disparity information at arbitrary frame spacings during the caption display period, at one frame spacings for example. For example, for this interpolation processing, interpolation processing involving low-pass filter (LPF) processing in the temporal direction (frame direction) is performed rather than linear interpolation processing, change in the disparity information in predetermined frame spacings following the interpolation processing in the temporal direction (frame direction) is made to be smooth. The dashed line a in Fig. 25 illustrates an example of LPF output.

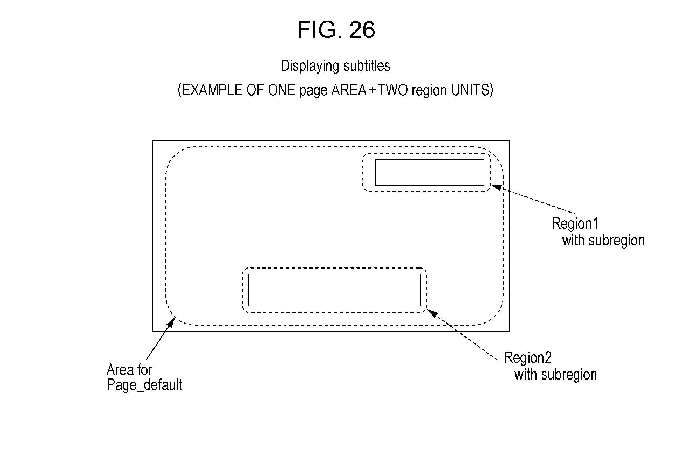

Fig. 26 illustrates a display example of subtitles as captions. With this display example, two regions (Region) as a caption display region are included in a page area (Area for Page_default) (region 1 and region 2). One or multiple sub regions are included in a region. Here, we will say that a region includes one sub region, so a region area and a sub region area are equal.

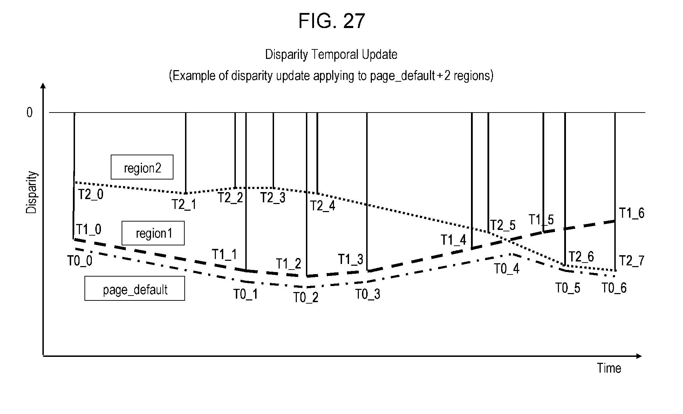

Fig. 27 illustrates an example of disparity information curves of the regions and the page, in a case where disparity information in region increments and disparity information in page increments are both included in the DSS segment as disparity information (Disparity) sequentially updated during the caption display period. Here, the disparity information curve of the page is formed so as to take the smallest value of the disparity information curves of the two regions.

With regard to region 1 (Region1), there are seven sets of disparity information, which are the start point-in-time T1_0, and subsequent updating points-in-time T1_1, T1_2, T1_3, and so on through T1_6. Also, with regard to region 2 (Region2), there are eight sets of disparity information, which are the start point-in-time T2_0, and subsequent updating points-in-time T2_1, T2_2, T2_3, and so on through T2_7. Further, with regard to the page (Page_default), there are seven sets of disparity information, which are the start point-in-time T0_0, and subsequent updating points-in-time T0_1, T0_2, T0_3, and so on through T0_6.

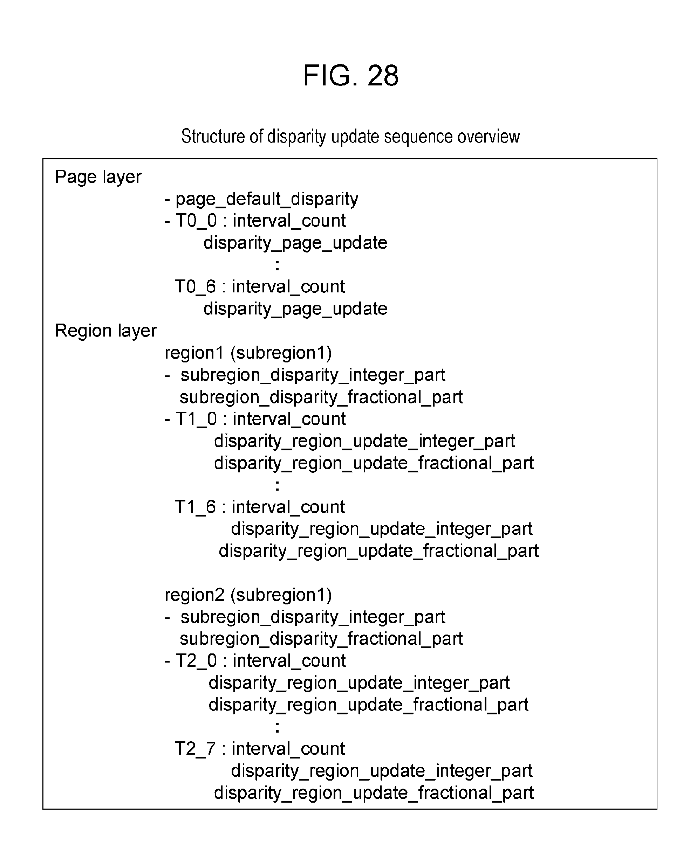

Fig. 28 illustrates what sort of structure the disparity information of the page and the regions shown in Fig. 27 is transmitted with. First, the page layer will be described. Situated in this page layer is "page_default_disparity", which is a fixed value of disparity information. With regard to the disparity information sequentially updated during the caption display period, "interval_count" indicating the number of interval periods, and "disparity_page_updete" indicating the disparity information thereof, are sequentially situated, corresponding to the start point-in-time and the subsequent updating points-in-time. Note that "interval_count" at the starting point-in-time is set to "0".

Next, the region layer will be described. With regard to region 1 (sub region 1), there are disposed "subregion_disparity_integer_part" and "subregion_disparity_fractional_part" which are fixed values of disparity information. Here, "subregion_disparity_integer_part" indicates the integer portion of disparity information, and "subregion_ disparity_fractional_part" indicates the fraction part of the disparity information.

With regard to the disparity information sequentially updated during the caption display period, the "interval_count" indicating the number of interval periods, corresponding to the start point-in-time and the subsequent points-in-time, and "disparity_region_updete_integer_part" and "disparity_region_updete_fractional_part" indicating the disparity information, are sequentially situated. Here, "disparity_region_updete_integer_part" indicates the integer portion of disparity information, and "disparity_region_updete_fractional_part" indicates the fraction part of the disparity information. Note that "interval_ count" at the starting point-in-time is set to "0".

With regard to region 2 (sub region 2), this is the same as region 1 described above, and there are disposed "subregion_disparity_integer_part" and "subregion_disparity_fractional_part" which are fixed values of disparity information. With regard to the disparity information sequentially updated during the caption display period, the "interval count" indicating the number of interval periods, corresponding to the start point-in-time and the subsequent updating points-in-time, and "disparity_region_updete_integer_part" and "disparity_region_updete_fractional_part" indicating the disparity information, are sequentially situated.

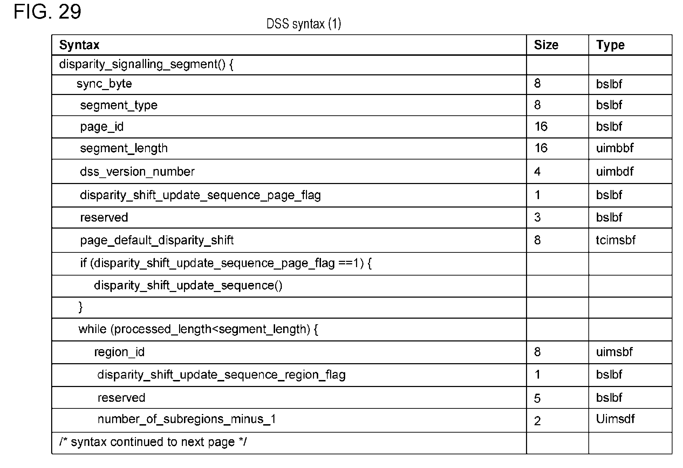

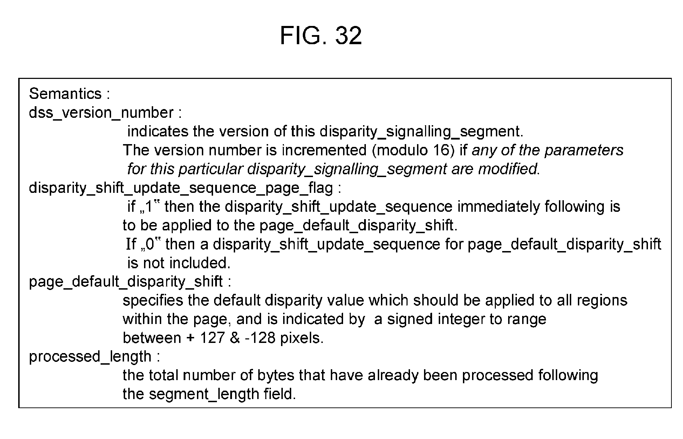

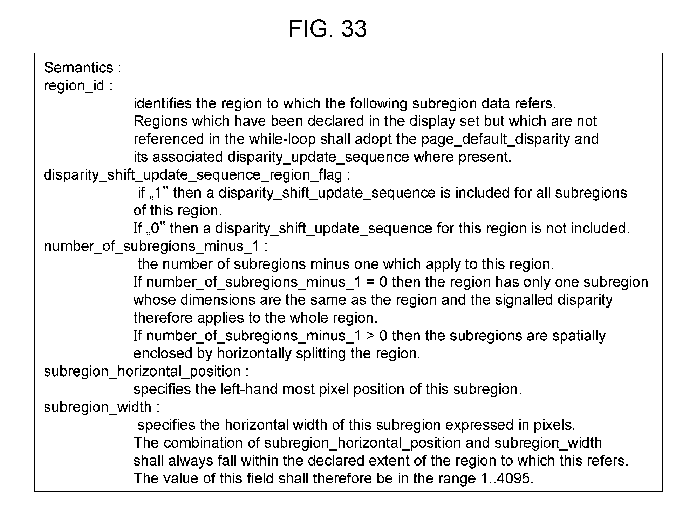

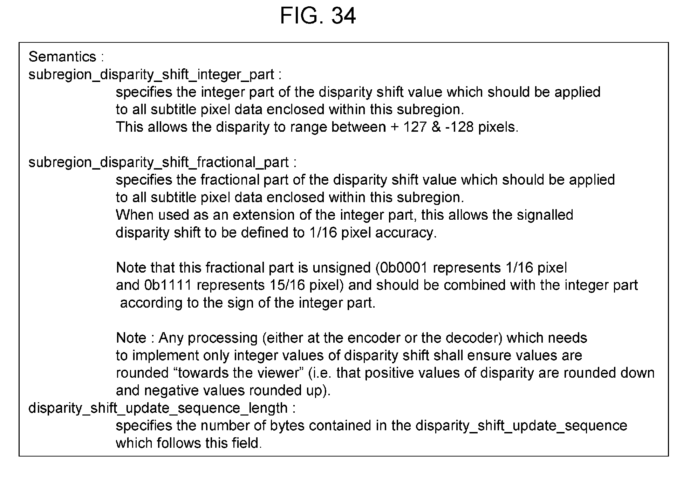

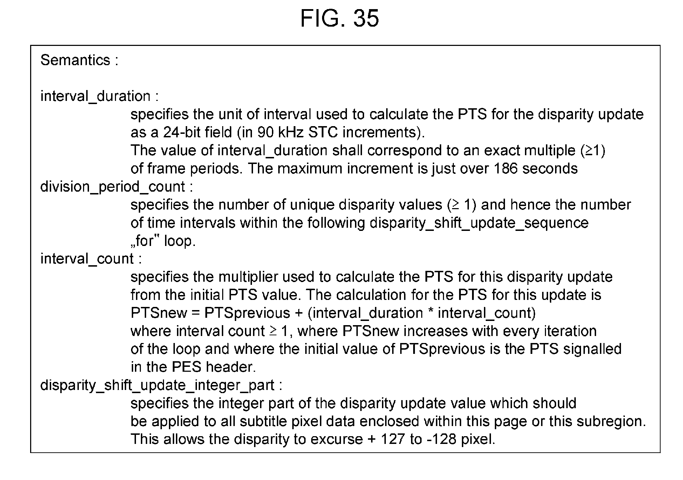

Fig. 29 through Fig. 31 illustrate a structure example (syntax) of a DSS (Disparity_Signaling_Segment). Fig. 32 through Fig. 35 illustrate principal data stipulations (semantics) of a DSS. This structure includes the various information of "sync_byte", "segment_type", "page_id", "segment_length", and "dss_version_number". "segment_type" is 8-bit data indicating the segment type, and is a value indicating a DSS here. "segment_length" is 8-bit data indicating the number of subsequent bytes.

The 1-bit flag of "disparity_shift_update_sequence_page_flag" indicates whether or not there is disparity information sequentially updated during the caption display period as page increment disparity information. "1" indicates that there is, and "0" indicates that there is none. The 8-bit field of "page_default_disparity_shift" is page increment fixed disparity information, i.e., disparity information used in common during the caption display period. In the event that the above-described flag "disparity_page_update_sequence_flag" is "1", the "disparity_shift_update_sequence()" is read out.

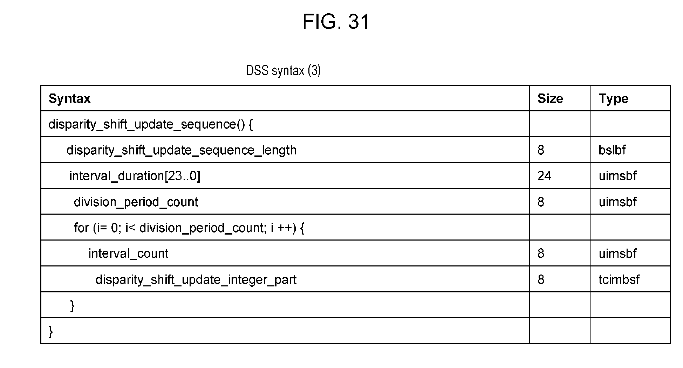

Fig. 31 illustrates a structure example (Syntax) of "disparity_shift_update_sequence()". "disparity_page_update_sequence_length" is 8-bit data indicating the number of following bytes. The 24-bit field "interval_duration[23..0]" specifies the interval period (Interval Duration) (see Fig. 25) as increment period in 90 KHz increments. That is to say, "interval_duration[23..0]" represents a value where this interval period (Interval Duration) was measured with a 90-KHz clock, with a 24-bit length.

The reason why the PTS inserted in the PES header portion is 33 bits long but this is 24 bits long is as follows. That is to say, time exceeding 24 hours worth can be expressed with a 33-bit length, but this is an unnecessary length for this interval period (Interval Duration) within the caption display period. Also, using 24 bits makes the data size smaller, enabling compact transmission. Further, 24 bits is 8 x 3 bits, facilitating byte alignment.

The 8-bit field of "division_period_count" indicates the number of periods when disparity information has influence (Division Period). For example, in the case of the updating example shown in Fig. 25, this number is "7", corresponding to the starting point-in-time T1_0 and the subsequent updating points-in-time T1_1 through T1_6. The following for loop is repeated by the number which this 8-bit field "division_period_count" indicates.

The 8-bit field of "interval_count" indicates the number of interval periods. For example, with the updating example shown in Fig. 25, M, N, P, Q, R, and S correspond. The 8-bit field of "disparity_shift_update_integer_part" indicates the disparity information. "interval_count" is set to "0" in accordance with the starting time disparity information (initial value of disparity information). That is to say, in the event that the "interval_count" is "0", the "disparity_page_update" indicate the starting point-in-time disparity information (initial value of disparity information).

The while loop in Fig. 29 is repeated in the event that the data length processed so far (processed_length) has not yet reached the segment data length (segment_length). Disparity information in region increments or sub region increments within the region is situated in this while loop. Now, one or multiple sub regions are included in a region, and there are cases where a sub region area is the same as a region area.

Information of "region_id" is included in this while loop. The 1 bit flag of "disparity_shift_update_sequence_region_flag" is flag information indicating whether "disparity_shift_update_sequence()" for all sub regions in the region exist or not. The 2 bit field of "number_of_subregions_minus_1" indicates the value that subtracted 1 from the number of sub regions in the region.
At the time of "number_of_subregions_minus_1=0 ", the region has one sub region with the same size as the region.

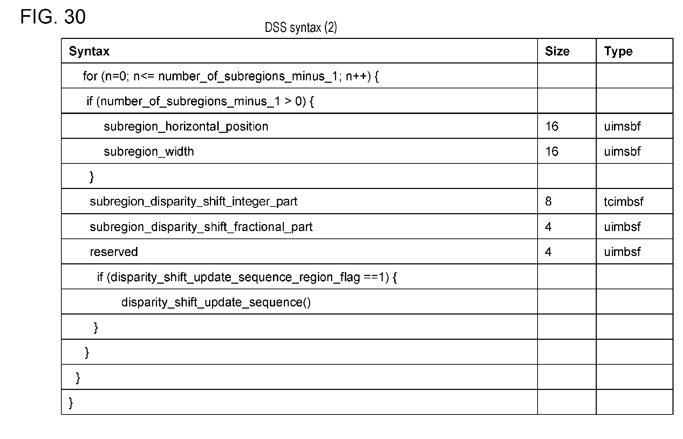

At the time of "number_of_subregions_minus_1>0", the region has multiple sub regions divided in the horizontal direction. In the for loop of Fig. 30, information of "subregion_horizontal_position", "subregion_width" are included by the number of the sub regions. The 16 bit Field of "subregion_horizontal_position" indicates the pixel location of the left edge of the sub region. "subregion_width" indicates the width of the sub region in the horizontal direction with the number of pixels.

The 8-bit field of "subregion_disparity_shift_integer_part" is fixed region increment (sub region increment) disparity information, i.e., used in common during the caption display period, indicating the integer portion of the disparity information. The 4-bit field of "subregion_disparity_shift_fractional_part" is fixed region increment (sub region increment) disparity information, i.e., used in common during the caption display period, indicating the fraction portion of the disparity information. In the event that the above-described flag "disparity_shift_update_sequence_region_flag" is "1", the disparity_shift_update_sequence()" (see Fig. 31) is read out.

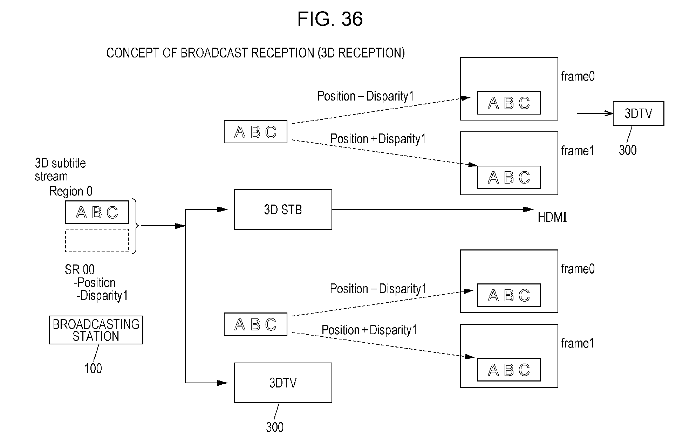

Fig. 36 indicates a broadcast reception concept in a case that a set top box 200 and television receiver 300 are 3D-compatible devices. In this case, with the broadcasting station 100, the sub region "SR 00" is defined in the region "Region0", and the disparity information "Disparity 1" is set. Here, it is assumed that the region "Region 0" and the sub region "SR 00" are the same region. From the broadcasting station 100, subtitle data, display control information (region information "Position" and disparity information "Disparity 1" of the sub region) are transmitted, along with stereoscopic image data.

First, description will be made regarding a case of being received at a set top box 200 which is a 3D-compatible device. In this case, the set top box 200 reads the data of the segments making up subtitle data from 2D stream in the "first type", reads and uses the data of the segment of DSS including display control information such as disparity information are read from 3D extended stream. Also, the set top box 200 reads and uses the data of the segments making up the subtitle data from 3D stream, and further the segment of DSS including the display control information such as the disparity information are read, and used, in the "second type".

The set top box 200 generates the display data of the region for displaying subtitle, based on the subtitle data.

The set-top box 200 then superimposes the display data of the region in a left eye image frame (frame0) portion and right eye image frame (frame1) portion making up stereoscopic image data, respectively, and obtains output stereoscopic image data. In this case, the set top box 200 performs shift adjustment of the position of the display data superimposed by each, based on the disparity information. Note that the set top box 200 performs change in the superimposed position, size, or the like as appropriate, in accordance with the transmission format of the stereoscopic image data (side by side format, top and bottom format, frame sequential format, or format where each view has full screen size).

The set top box 200 transmits the output stereoscopic image data thus obtained to the 3D-compatible television receiver 300 via an HDMI digital interface, for example. The television receiver 300 subjects 3D signal processing to the stereoscopic image data transmitted from the set top box 200, and generates data of the left eye image and right eye image where the subtitle has been superimposed. The television receiver 300 then displays a binocular disparity image (left eye image and right eye image) on a display panel such as an LCD or the like, for the user to recognize a stereoscopic image.

Next, description will be made regarding a case of reception at the television receiver 300 which is a 3D-compatible device. In this case, the television receiver 300 reads the data of the segments making up the subtitle data from 2D stream in the "first type", reads and uses the data of the segment of DSS including display control information such as disparity information from 3D extended stream. Also, the set top box 200 reads and uses the data of the segments making up the subtitle data from 3D stream in the "second type", and further, the data of the segment of DSS including display control information such as disparity information.

The television receiver 300 generates the display data of the region for displaying subtitles, based on subtitle data. The television receiver 300 superimposes then the display data of the region in left eye image data and right eye image data obtained by performing processing in accordance with the transmission format to the stereoscopic image data, and generates the data of the left eye image and right eye image on which the subtitles has been superimposed. The television receiver 300 then displays a binocular disparity image (left eye image and right eye image) on a display panel such as an LCD or the like, for the user to recognize a stereoscopic image.

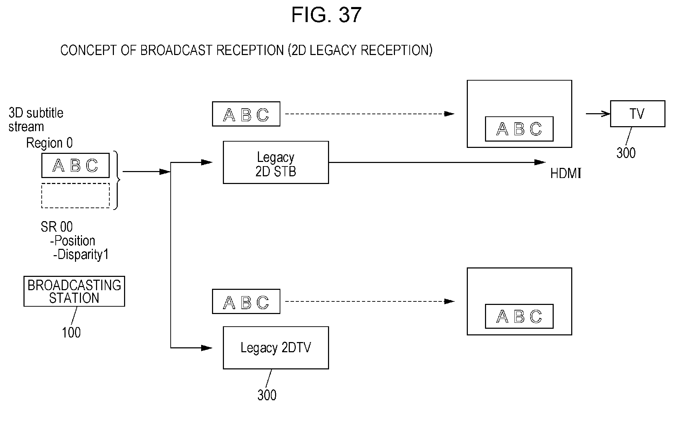

Fig. 37 indicates a broadcast reception concept regarding a case where the set top box 200 and television receiver 300 are legacy 2D-compatible devices. In this case, with the broadcasting station 100, the sub region "SR 00" is defined in the region "Region 0", and the disparity information "Disparity 1" is set. Here, it is assumed that the region "Region 0" and sub region "SR 00" are the same region. From the broadcasting station 100, subtitle data, display control information (region information "Position", and disparity information "Disparity 1" of the sub region) are transmitted, along with stereoscopic image data.

Next, description will be made regarding a case of reception at a set top box 200 which is a legacy 2D-compatible device. In this case, the set top box 200 reads and uses the data of the segments making up subtitle data from 2D stream in both of the "first type" and "second type" That is to say, reading of the segment of DSS including display control information such as disparity information is not performed, so the reading thereof can be prevented from impeding the reception processing.

The set top box 200 generates the display data of the region to display subtitle, based on subtitle data. The set top box 200 then superimposes the display data of the region on the two-dimensional image data obtained by subjecting processing in accordance with a transmission format as to stereoscopic image data, and obtains output two-dimensional image data.

The set top box 200 transmits the output two-dimensional image data thus obtained to the television receiver 300 via an HDMI digital interface, for example. The television receiver 300 displays two-dimensional image according to two-dimensional image data sent from the set top box 200.

Next, description will be made regarding a case of reception at a television receiver 300 which is a 2D-compatible device. In this case, the television receiver 300 reads and uses the data of the segments making up subtitle data from 2D stream in either of the "first type" and the "second type". That is to say, reading of the segment of DSS including display control information such as disparity information is not performed so the reading thereof can be prevented from impeding the reception processing.

The television receiver 300 generates the display data of the region for displaying subtitles, based on subtitle data. The television receiver 300 superimposes the display data of this region on the two-dimensional image data obtained by subjecting processing in accordance with the transmission format as to stereoscopic image data and obtains two-dimensional image data. The television receiver 300 then displays a two-dimensional image by this two-dimensional image data.

With the transmission data generation unit 110 shown in Fig. 2, the transport stream TS as multiplexed data stream output from the multiplexer 119 is considered that two private data streams are included therein. That is to say, 2D stream and 3D extended stream are included in the "first type" and 2D stream and 3D stream are included in the "second type" (see Fig. 10 and Fig. 11).

Therefore, with the legacy 2D-compatible reception device of the reception side, reception processing can be performed by reading only each segment making up the subtitle data from 2D stream. That is to say, with the 2D-compatible reception device, there is no need of reading a segment of DSS from 3D extended stream or 3D stream, and accordingly impeding of the reception processing can be prevented.

Also, the 3D-compatible reception device of the reception side can read a segment of DSS from the 3D extended stream or 3D stream, and accordingly can read display control information (including region information, disparity information, or the like of the sub region), and thus can perform disparity adjustment of the subtitle (caption) of the left eye image and right eye image for the display content of the stereoscopic image.

Also, with the transmission data generation unit 110 shown in Fig. 2, a DSS segment including disparity information sequentially updated in a subtitle display period can be transmitted, and accordingly display positions of the left eye subtitle and right eye subtitle can be controlled dynamically. Accordingly, at the reception side, disparity provided between left eye subtitles and right eye subtitles can be dynamically changed in conjunction with change in the contents of the image.

Also, with the transmission data generating unit 110 shown in Fig. 2, the disparity information of the frames at each updating frame spacing included in the DSS segments obtained at the subtitle encoder 118 is not an offset value from the previous disparity information but disparity information itself. Accordingly, even if an error occurs in the process of interpolation at the reception side, the error can be recovered from within a certain delay time.

[Description of Set Top Box]

Returning to Fig. 1, the set top box 200 receives transport stream TS transmitted over broadcast waves from the broadcasting station 100. This transport stream TS includes stereoscopic image data including left eye image data and right eye image data, and audio data. This transport stream TS also includes subtitle data (including display control information) for stereoscopic images to display subtitles (captions) as well.

That is to say, the transport stream TS has a video data stream, audio data stream, and the first and second private data streams, as a PES stream. As described above, in the case of the "first type", the first and second private data streams are a 2D stream and 3D extended stream, respectively, (see Fig. 10). Also, in the case of the "second type", the first and second private data streams are a 2D stream and 3D stream, respectively (see Fig. 11).

The set top box 200 includes a bit stream processing unit 201. In the event that a set top box 200 is a 3D-compatible device (3D STB), the bit stream processing unit 201 acquires stereoscopic image data, audio data, and subtitle data (including display control information) from the transport stream TS.

In this case, the bit stream processing unit 201 acquires the data of the segments making up the subtitle data from 2D stream, and acquires the data of the segment of DSS including display control information such as the disparity information from 3D extended stream in the "first type". Also, the bit stream processing unit 201 acquires the data of the segments making up the subtitle date from 3D stream and further the data of the segment of DSS including display control information such as disparity information in the "second type".

The bit stream processing unit 201 then generates output stereoscopic image data where subtitles have been superimposed in a left eye image frame (frame0) portion and a right eye image frame (frame1) portion, respectively, using stereoscopic image data and subtitle data (including display control information) (see Fig. 36). In this case, disparity can be provided between the subtitles (left eye subtitles) to be superimposed on the left eye image and subtitles (right eye subtitles) to be superimposed on the right eye image.

As described above, the display control information added to the subtitle data for stereoscopic images transmitted from the broadcasting station 100 includes disparity information, and disparity can be provided between the left eye subtitles and right eye subtitles based on this disparity information, for example. Thus, by providing disparity between the left eye subtitles and right eye subtitles, the user can recognize the subtitles (captions) to be closer than the image.

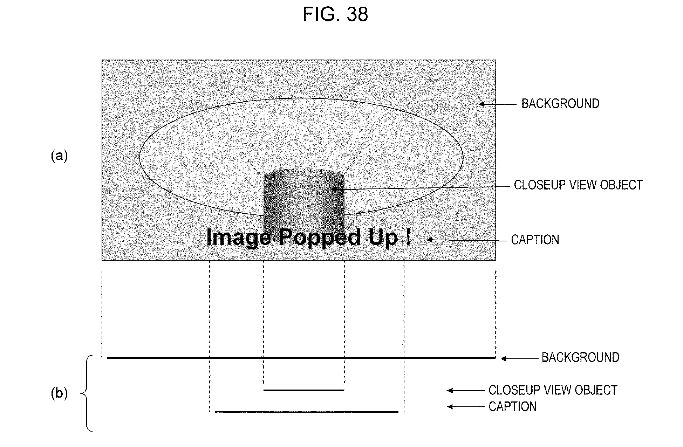

Fig. 38(a) illustrates a display example of a subtitle (caption) on an image. This display example is an example wherein a caption is superimposed on an image made up of background and a closeup object. Fig. 38(b) illustrates perspective of the background, closeup object, and caption, of which the caption is recognized as the nearest.

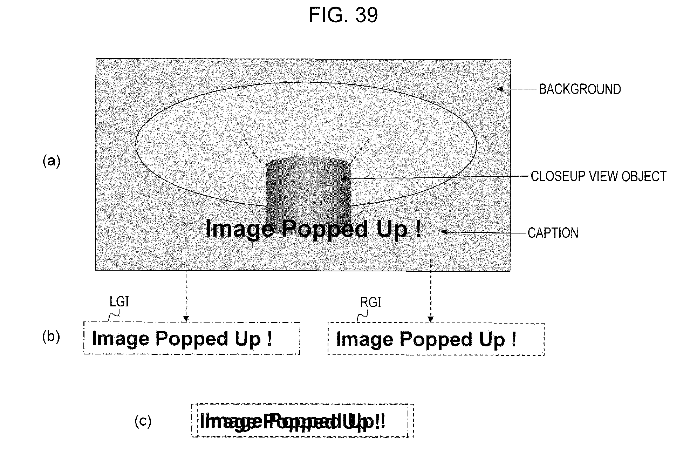

Fig. 39(a) illustrates a display example of a subtitle (caption) on an image, the same as with Fig. 38(a). Fig. 39 (b) illustrates a left eye caption LGI to be superimposed on a left eye image and a right eye caption RGI to be superimposed on a right eye image. Fig. 39(c) illustrates that disparity is given between the left eye caption LGI and the right eye caption RGI so that the caption will be recognized as being closest.

Also, in the event that the set top box 200 is a legacy 2D-compatible device (2D STB), the bit stream processing unit 201 acquires stereoscopic image data, audio data, and subtitle data (bitmap pattern data not including display control information) from the transport streams TS. The bit stream processing unit 201 then uses the stereoscopic image data and subtitle data and generates two-dimensional image data with subtitles superimposed (see Fig. 37).

In this case, the bit stream processing unit 201 acquires the data of the segments making up the subtitle data from 2D stream in both of the "first type" and the "second type". That is to say, in this case, reading a DSS segment from the 3D extended stream or 3D stream is not performed, so the reading can be prevented from impeding the reception processing.

[Configuration Example of Set Top Box]

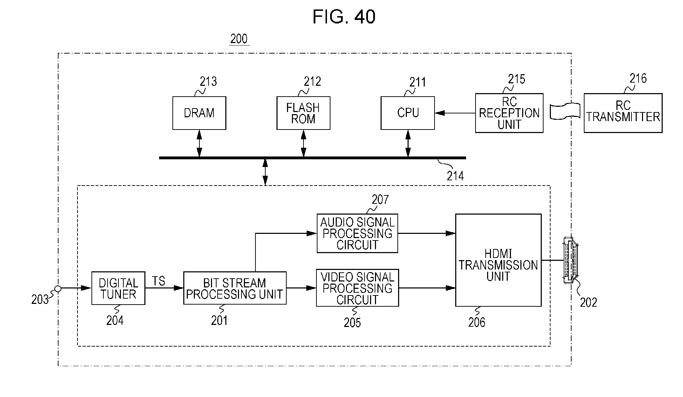

A configuration example of the set top box 200 will be described. Fig. 40 illustrates a configuration example of the set top box 200. This set top box 200 includes a bit stream processing unit 201, an HDMI terminal 202, an antenna terminal 203, a digital tuner 204, a video signal processing circuit 205, an HDMI transmission unit 206, and an audio signal processing circuit 207. Also, this set top box 200 includes a CPU 211, flash ROM 212, DRAM 213, an internal bus 214, a remote control reception unit (RC reception unit) 215, and a remote control transmitter (RC transmitter) 216.

The antenna terminal 203 is a terminal for inputting television broadcasting signal received at a reception antenna (not illustrated). The digital tuner 204 processes the television broadcasting signal input to the antenna terminal 203, and outputs transport stream TS (bit stream data) corresponding to the user's selected channel.

The bit stream processing unit 201 outputs the output stereoscopic image data and audio data where subtitles have been superimposed, based on the transport stream TS. In the event that a set top box 200 is a 3D-compatible device (3D STB), this bit stream processing unit 201 acquires stereoscopic image data, audio data, and subtitle data (including display control information) from the transport stream TS.

The bit stream processing unit 201 generates the output stereoscopic image data where subtitles have been superimposed by a left eye image frame (frame0) portion and right eye image frame (frame1) portion making up stereoscopic image data, respectively (see Fig. 36). In this case, based on the disparity information, disparity is provided between a subtitle (left eye subtitle) to be superimposed on the left eye image and subtitle (right eye subtitle) to be superimposed on the right eye image.

That is to say, the bit stream processing unit 201 generates display data of the region for displaying subtitle, based on subtitle data. The bit stream processing unit 201 then superimposes the display data of the region in a left eye image frame (frame0) portion and right eye image frame (frame1) portion making up stereoscopic image data, respectively, and obtains output stereoscopic image data. In this case, the bit stream processing unit 201 performs shift adjustment of the position of display data superposed by each, based on the disparity information.

Also, in the event that the set top box 200 is a 2D-compatible device (2D STB), the bit stream processing unit 201 acquires stereoscopic image data, audio data, and subtitle data (not including display control information). The bit stream processing unit 201 uses the stereoscopic image data and subtitle data to generate two-dimensional image data with subtitles superimposed (see Fig. 37).

That is to say, the bit stream processing unit 201 generates display data of the region for displaying subtitles, based on subtitle data. The bit stream processing unit 201 then superimposes the display data of the region on the two-dimensional image data obtained by subjecting processing in accordance with a transmission format as to stereoscopic image data and obtains output two-dimensional image data.

The video signal processing circuit 205 subjects the image data obtained at the bit stream processing unit 201 to image quality adjustment processing and so forth according to need, and supplies the image data after processing thereof to the HDMI transmission unit 206. The audio signal processing circuit 207 subjects the audio data output from the bit stream processing unit 201 to audio quality adjustment processing according to need, and supplies the audio data after processing thereof to the HDMI transmission unit 206.

The HDMI transmission unit 206 transmits, by communication conforming to HDMI, uncompressed image data and audio data for example, from the HDMI terminal 202. In this case, since the data is transmitted by an HDMI TMDS channel, the image data and audio data are subjected to packing, and are output from the HDMI transmission unit 206 to the HDMI terminal 202.

The CPU 211 controls the operation of each unit of the set top box 200. The flash ROM 212 performs storage of control software, and storage of data. The DRAM 213 configures the work area of the CPU 211. The CPU 211 loads the software and data read out from the flash ROM 212 to the DRAM 213, and starts up the software to control each unit of the set top box 200.

The RC reception unit 215 receives a remote control signal (remote control code) transmitted from the RC transmitter 216, and supplies to the CPU 211. The CPU 211 controls each unit of the set top box 200 based on this remote control code. The CPU 211, flash ROM 212, and DRAM 213 are connected to the internal bus 214.

The operation of the set top box 200 will briefly be described. The television broadcasting signal input to the antenna terminal 203 is supplied to the digital tuner 204. With this digital tuner 204, the television broadcasting signal is processed, and transport stream (bit stream data) TS corresponding to the user's selected channel is output.

The transport stream (bit stream data) TS output from the digital tuner 204 is supplied to the bit stream processing unit 201. In this bit stream processing unit 201, output image data for output to the television receiver 300 is generated as described below.

In the event that a set top box 200 is a 3D-compatible device (3D STB), stereoscopic image data, audio data, and subtitle data (including display control information) are acquired by transport stream TS. With this bit stream processing unit 201, output stereoscopic image data where subtitles have been superimposed in a left eye image frame (frame0) portion and a right eye image frame (frame1) portion making up stereoscopic image data, respectively, is generated. At this time, based on disparity information, disparity is provided between the left eye subtitles to be superimposed on the left eye image and right eye subtitles to be superimposed on the right eye image.

Also, in the event that a set top box 200 is 2D-compatible device (2D STB), stereoscopic image data, audio data, and subtitle data (not including display control information) are acquired. With this bit stream processing unit 201, two-dimensional image data with subtitles superimposed thereupon is generated by using the stereoscopic image data and subtitle data.

The output image data obtained at the bit stream processing unit 201 is supplied to the video signal processing circuit 205. At this video signal processing circuit 205, image quality adjustment processing and the like is subjected on the output image data as necessary. The image data following processing that is output from the video signal processing circuit 205 is supplied to the HDMI transmission unit 206.

Also, the audio data obtained at the bit stream processing unit 201 is supplied to the audio signal processing circuit 207. At the audio signal processing circuit 207, the audio data is subjected to audio quality adjustment processing and the like according to need. The audio data after processing that is output from the audio signal processing circuit 207 is supplied to the HDMI transmission unit 206. The image data and audio data supplied to the HDMI transmission unit 206 are transmitted from the HDMI terminal 202 to the HDMI cable 400 by an HDMI TMDS channel.

[Configuration Example of Bit Stream Processing Unit]

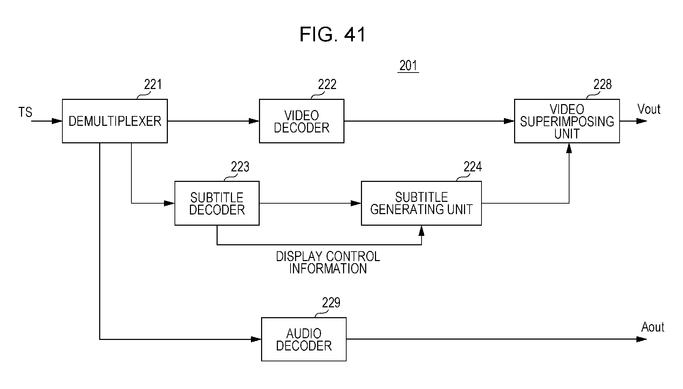

Fig. 41 illustrates a configuration example of the bit stream processing unit 201 in the event that a set top box 200 is a 3D-compatible device (3D STB). This bit stream processing unit 201 is configured to correspond to the above transmission data generating unit 110 shown in Fig. 2. This bit stream processing unit 201 includes a demultiplexer 221, a video decoder 222, and an audio decoder 229. Also, the bit stream processing unit 201 includes a subtitle decoder 223, a subtitle generating unit 224, a display control unit 225, a disparity information processing unit 227, and a video superimposing unit 228.

The demultiplexer 221 extracts packets of video data stream and audio data stream from the transport stream TS, and sends these to the decoders so as to be decoded. Also, the demultiplexer 221 further extracts the following streams, sends to the subtitle decoder 223 and decodes. In this case, 2D stream and 3D extended stream are extracted and decoded with the "first type" and 3D stream is extracted and decoded with the "second type".

The CPU 211 recognizes that both PES streams should be decoded based on the value of "composition_page_id" in the subtitle descriptor situated in the ES loop in the PMT regarding the 2D stream and 3D extended stream, with the "first type". That is to say, in the event that the value of "composition_page_id" is the same, it means that both PES streams should be decoded. Alternatively, in the event that the value of composition_page_id" is the same value and moreover a special value (predefined), these means that both PES streams should be decoded.

Note that with the "first type", it may be conceived to newly define a descriptor which indicates that both of the two PES streams of the 2D stream and 3D extended stream should be decoded, correlating the two streams, and to situate this at a predetermined position. The CPU 211 recognizes that both PES streams should be decoded by this descriptor, and controls the bit stream processing unit 201.

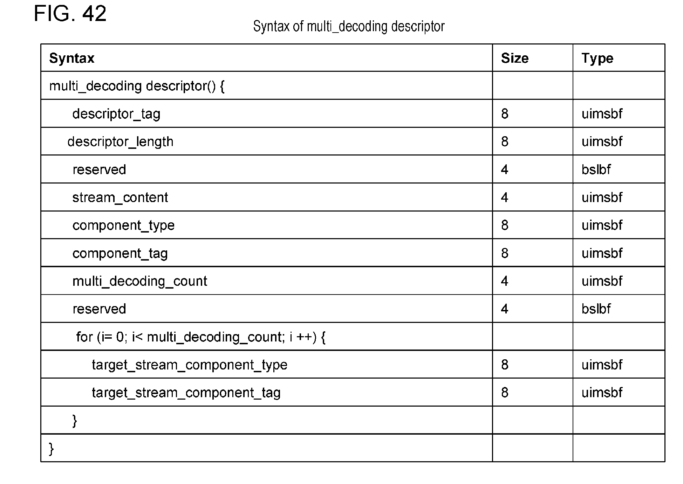

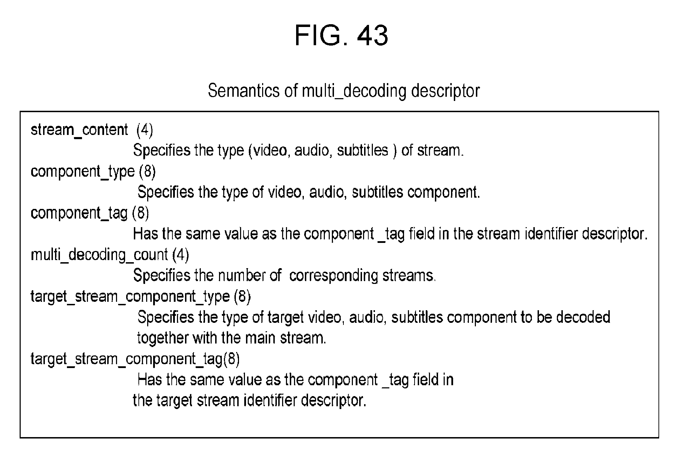

Fig. 42 indicates a configuration example (syntax) of the multi-decoding descriptor (multi_decoding descriptor) which can be used to correlate 2D stream and 3D extended stream. Fig. 43 indicates the contents of main information (Semantics) in the configuration example.

The 8-bit field of "descriptor_tag" indicates that this descriptor is a multi-decoding descriptor. The 8-bit Field of "descriptor_length" shows the overall byte size after this field.

The 4-bit field of "stream_content" indicates, for example, stream types such as a video, audio, subtitle or the like, of the main stream. The 4-bit field of "component_type", for example, indicates component types such as a video, audio, subtitle or the like of the main stream. These "stream_content" and "component_type" are considered to be as same information as "stream_content" and "component_type" in the component descriptor corresponding to the main stream.

In this embodiment, the main stream is considered to be the 2D stream, "stream_content" is considered to be subtitle "subtitle", and "component_type" is considered to be "2D" for two dimensions.

The "component_tag" has the same value as "component_tag" in the stream identifier descriptor (stream_identifier descriptor) corresponding to the main stream. Accordingly, "component_tag" correlates the stream identifier descriptor and multi-decoding descriptor.

The 4-bit field of "multi_decoding_count" indicates the number of streams of the target that correlates to the main stream. In this embodiment, the stream of the target correlated to the 2D stream which is the main stream is 3D extended stream, and "multi_decoding_count" is "1".

The 8-bit field of "target_stream_component_type" indicates stream types such as video, audio, subtitle, for example, of a stream added to the main stream. The 4-bit field of "component_type" indicates the component type of the target stream. Also, the 8-bit field of "target_stream_component_tag" has the same value as "component_tag" in the stream identifier descriptor (stream_identifier descriptor) corresponding to the target stream.

In this embodiment, the target stream is considered to be a 3D extended stream, "target_stream_component_type" is considered to be "3D" for three dimensions, and "target_stream_component_tag" is considered to be the same value as "component_tag" of the 3D extended stream.

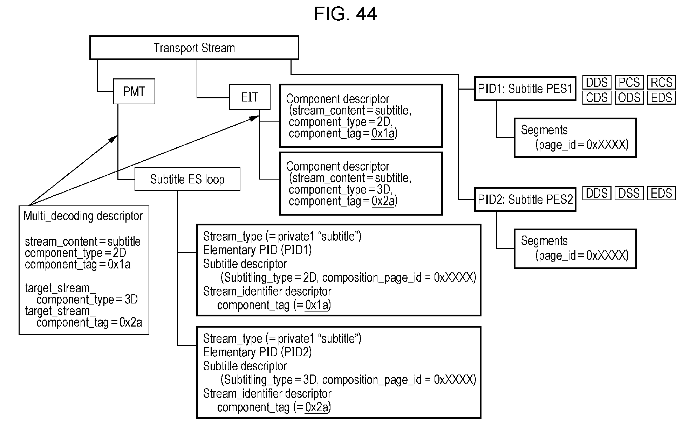

For example, the multi decoding descriptor is situated beneath a PMT or beneath an EIT. Fig. 44 indicates a configuration example of transport streams TS of the "first type" in the event that a multi decoding descriptor has been disposed.

Returning to Fig. 41, the video decoder 222 performs processing opposite to that of the video encoder 112 of the transmission data generating unit 110 described above. That is to say, the video decoder 222 reconstructs the video data stream from the video packets extracted at the demultiplexer 221, and decoding processing is performed to obtain stereoscopic image data including left eye image data and right eye image data. This stereoscopic image data transmission format is, for example, side by side format, top and bottom format, frame sequential format, or a video transmission format where each view occupies the full screen size.

The subtitle decoder 223 performs processing opposite to that of the subtitle encoder 118 of the transmission data generating unit 110 described above. That is to say, the subtitle decoder 223 reconstructs the streams from each stream packets extracted at the demultiplexer 221, performs decoding processing, and acquires the following segment data.

That is to say, the subtitle decoder 223 acquires the data of the segments making up subtitle data and further acquires the data of the DSS segment. The subtitle decoder 223 obtains the subtitle data, based on the data of the segments making up subtitle data. Also, the subtitle decoder 223 obtains display control information (region information and disparity information of the sub region), based on the data of the DSS segment.

The subtitle generating unit 224 generates the display data of the region for displaying subtitle, based on the subtitle data acquired at the subtitle decoder 223. Here, a transparent color is assigned to a region which is in the region but not surrounded by the sub region. The subtitle generating unit 224 generates display data (bit map data) of a left eye subtitle and right eye subtitle to superimpose in a left eye image frame (frame0) portion and a right eye image frame (frame1) portion, respectively, making up stereoscopic image data, from this display data.

In this case, the subtitle generating unit 224 performs change in superimposing position, size, and so forth, as appropriate, in accordance with the stereoscopic image data transmission format (side by side format, top and bottom format, frame sequential format, MVC format, or the like). Also, in this case, the subtitle generating unit 224 performs shift adjustment of the position of the display data superimposed on each frame, based on the disparity information acquired by the subtitle decoder 223 (see Fig. 36).

Note that display control information includes disparity information to be used in common during the caption display period. Also, this display control information may further include the disparity information sequentially updated during the caption display period. The disparity information sequentially updated during the caption display period is made up of disparity information of the first frame in the caption display period, and disparity information of frames for each updating frame spacing thereafter, as described above.

The subtitle generating unit 224 uses disparity information to be used in common during a caption display period, as it is. On the other hand, with regard to the disparity information sequentially updated during the caption display period, the subtitle generating unit 224 subjects this to interpolation processing, and generates and uses disparity information at an arbitrary frame spacing during the caption display period, e.g., one frame spacing. The subtitle generating unit 224 performs, for example, interpolation processing with the low pass filter (LPF) processing in the temporal direction (frame direction) as this interpolation processing, not linear interpolation processing. Thus, the change in the temporal direction (frame direction) of the disparity information of the predetermined frame interval after the interpolation processing becomes smooth.

Now, in the event that just the disparity information used in common during the caption display period is transmitted, the subtitle generating unit 224 uses this disparity information. Also, in the event that disparity information sequentially updated during the caption display period is also further sent, the subtitle generating unit 224 uses one or the other selectively. Using disparity information sequentially updated during the caption display period enables disparity to be applied to the left eye subtitles and right eye subtitles to be dynamically changed in conjunction with changes in the contents of the image.

The video superimposing unit 228 obtains output stereoscopic image data Vout. In this case, the video superimposing unit 228 superimposes the display data (bitmap data) of the left eye subtitle and right eye subtitle that has been generated at the subtitle generating unit 224, on the stereoscopic image data obtained at the video decoder 222. The video superimposing unit 228 externally outputs the output stereoscopic image data Vout from the bit stream processing unit 201.

Also, the audio decoder 229 performs processing the opposite from that of the audio encoder 113 of the transmission data generating unit 110 described above. That is to say, the audio decoder 229 reconstructs the audio elementary stream from the audio packets extracted at the demultiplexer 221, performs decoding processing, and obtains audio data Aout. The audio decoder 229 externally outputs the audio data Aout from the bit stream processing unit 201.

The operations of the bit stream processing unit 201 shown in Fig. 41 will be briefly described. The transport stream TS output from the digital tuner 204(see Fig. 40) is supplied to the demultiplexer 221. At the demultiplexer 221, packets of video data stream and audio data stream are extracted from the transport stream TS, and supplied to the decoders. Also, at this this demultiplexer 221, packets of 2D stream and 3D extended stream, or 3D stream are further extracted, and supplied to the subtitle decoder 223.

The video data stream from the packets of video data extracted at the demultiplexer 221 is reconstructed at the video decoder 222, and further subjected to decoding processing, thereby obtaining stereoscopic image data including the left eye image data and right eye image data. This stereoscopic image data is supplied to the video superimposing unit 228.

Also, at the subtitle decoder 223, data of each segment making up subtitle data are acquired, and further, the data of the segment of DSS are acquired. Further, at this subtitle decoder 223, subtitle data are obtained, based on the data of each segment making up the subtitle data. Also, at the subtitle decoder 223, display control information (region information and disparity information of the sub region) is obtained, based on the data of the segment of DSS. These subtitle data and display control information are supplied to the subtitle generating unit 224.

At the subtitle generating unit 224, display data (bitmap data) of the region for displaying subtitle are generated based on subtitle data. At the subtitle generating unit 224, the display data (bit map data) of the left eye subtitle and right eye subtitle which are superimposed in a left eye image frame (frame0) portion and right eye image frame (frame1) portion, respectively, making up stereoscopic image data from this display data, are generated. In this case, at the subtitle generating unit 224, the position of display data superimposed by each frame are subjected to shift adjustment, based on the disparity information.

The display data (bitmap data) of the left eye subtitles and right eye subtitles generated at the subtitle data generating unit 224 is supplied to the video superimposed unit 228. At the video superimposed unit 228, the display data of the left eye subtitles and right eye subtitles (bitmap data) is superimposed on the stereoscopic image data, and output stereoscopic image data Vout is obtained. This output stereoscopic image data Vout is externally output from the bit stream processing unit 201.

Also, at the audio decoder 229, the audio elementary stream is reconstructed from the audio packets extracted at the demultiplexer 221, and further decoding processing is performed, thereby obtaining audio data Aout corresponding to the stereoscopic image data Vout for display that has been described above. This audio data Aout is externally output from the bit stream processing unit 201.

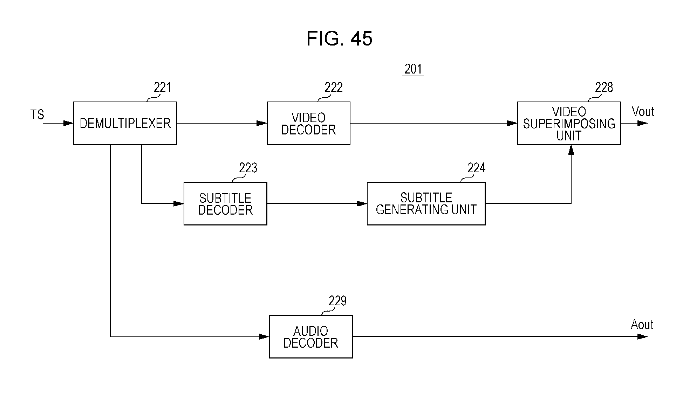

Fig. 45 shows a configuration example of the bit stream processing unit 201 in the event that a set top box 200 is a 2D-compatible device (2D STB). In this Fig. 45, portions corresponding to Fig. 41 are denoted by the same reference numerals, and detailed description will be omitted. Hereinafter, for the convenience of the description, the bit stream processing unit 201 shown in Fig. 41 will be referred to as 3D-compatible bit stream processing unit 201, and the bit stream processing unit 201 shown in Fig. 45 will be referred to as 2D-compatible bit stream processing unit 201.

The video decoder 222 shown in Fig. 41 reconstructs the video data stream from the video packets extracted at the demultiplexer 221, and decoding processing is performed to acquire stereoscopic image data including left eye image data and right eye image data. In contrast, after having acquired stereoscopic image data, the video decoder 222 shown in Fig. 45 cuts out the left eye image data or right eye image data, and obtains two-dimensional image data by performing scaling processing and so forth according to need.

Also, with the 3D-compatible bit stream processing unit 201 shown in Fig. 41, the demultiplexer 221 extracts the packets of 2D stream and 3D extended stream in the "first type" and the packets of the 3D stream in the "second type", and sends to the subtitle decoder 223, as described above. In contrast, with the 2D-compatible bit stream processing unit 201 shown in Fig. 45, the demultiplexer 221 extracts only the packet of the 2D stream for either of the "first type" and "second type", and sends to the subtitle decoder 223.

Also, with the 3D-compatible bit stream processing unit 201 shown in Fig. 41, for example, the subtitle decoder 223, acquires the data of the segments making up the subtitle data from 2D stream and further acquires the data of DSS segment from 3D extended stream, as described above. Alternatively, this subtitle decoder 223 acquires the data of the segments making up subtitle data from 3D stream and further acquires the data of DSS segment.

In contrast, with the 2D-compatible bit stream processing unit 201 shown in Fig. 45, the subtitle decoder 223 acquires only the data of the segments making up the subtitle data from 2D stream. The subtitle decoder 223 then obtains subtitle data, based on the data of the segments making up subtitle data. In this case, the subtitle decoder 223 does not perform reading of the data of DSS segment. Therefore, reading can be prevented from impeding the reception processing.

Also, with the 3D-compatible bit stream processing unit 201 shown in Fig. 41, the subtitle generating unit 224 generates display data (bitmap data) of the region to display subtitle, based on the subtitle data. This subtitle generating unit 224 further generates display data (bitmap data) of the left eye subtitle and right eye subtitle, based on the display data. In contrast, with the 2D-compatible bit stream processing unit 201 shown in Fig. 45, the subtitle generating unit 224 only generates the display data of the region in which to display the subtitle, based on the subtitle data.

The video superimposed unit 228 superimposes display data (bitmap data) of the subtitle generated at the subtitle generating unit 224, as to two-dimensional image data obtained at the video decoder 222, and obtains output two-dimensional image data Vout. The video superimposing unit 228 then externally outputs the output two-dimensional image data Vout from the bit stream processing unit 201.

The operations of the 2D bit stream processing unit 201 shown in Fig. 45 will be briefly described. Note that operations of the audio system are the same as those of the 3D bit stream processing unit 201 shown in Fig. 41, and accordingly description thereof will be omitted.

The transport stream TS output from the digital tuner 204 (see Fig. 40) is supplied to the demultiplexer 221. At the demultiplexer 221, packets of a video data stream and audio data stream is extracted from the transport stream TS, and supplied to the decoders. Also, at this this demultiplexer 221, packets of the 2D stream are further extracted and supplied to the subtitle decoder 223.

The video data stream from the packets of the video data extracted at the demultiplexer 221 is reconstructed at the video decoder 222, and further subjected to decoding processing, thereby obtaining stereoscopic image data including the left eye image data and right eye image data. The video decoder 222 further cuts out the left eye image data or right eye image data from this stereoscopic image data, and obtains two-dimensional image data by performing scaling processing and so forth according to need. The two-dimensional image data is supplied to the video superimposed unit 228.

Also, at the subtitle decoder 223, the data of the segments making up the subtitle data from 2D stream are acquired. Subtitle data is then obtained at the subtitle decoder 223, based on the data of the segments making up the subtitle data. This subtitle data is supplied to the subtitle generating unit 224.

With the subtitle generating unit 224, display data (bitmap data) of the region for displaying subtitle are generated, based on the subtitle data. This display data is supplied to the video superimposed unit 228. With the video superimposed unit 228, subtitle display data (bitmap data) is superimposed as to the two-dimensional image data, and output two-dimensional image data Vout is obtained. This output two-dimensional image data Vout is externally output from the bit stream processing unit 201.

Also, with the set top box 200 shown in Fig. 40, the transport stream TS output from the digital tuner 204 includes, in addition to the stereoscopic image data and subtitle data, display control information. This display control information includes display control information (region information and disparity information and so forth of the sub region). Accordingly, disparity can be provided to the display positions of the left eye subtitles and right eye subtitles, so consistency in perspective between the objects in the image regarding which subtitles (captions) are being displayed can be maintained in an optimal state.

Also, with the set top box 200 shown in Fig. 40, in the event that disparity information sequentially updated to the display control information which is acquired at the display control information obtaining unit 226 of the 3D-compatible bit stream processing unit 201 (see Fig. 41) within the caption display period, the display positions of the left eye subtitles and the right eye subtitles can be dynamically controlled. Accordingly, disparity applied between the left eye subtitles and right eye subtitles can be dynamically changed in conjunction with changes in the contents of the image.

Also, with the set top box 200 shown in Fig. 40, interpolation processing is performed on disparity information of multiple frames making up the disparity information sequentially updated within the caption display period (period of predetermined number of frames) at the subtitle generating unit 224 of the 3D bit stream processing unit 201 (see Fig. 41). In this case, even in the event that disparity information is transmitted from the transmission side at each updating frame spacing, the disparity to be provided between the left eye subtitles and right eye subtitles can be controlled at fine spacings, e.g., every frame.

Also, with the set top box 200 shown in Fig. 40, the interpolation processing at the subtitle generating unit 224 of the 3D bit stream processing unit 201 (see Fig. 41), for example, can be performed involving low-pass filter processing in the temporal direction (frame direction). Accordingly, even in the event that disparity information is transmitted from the transmission side at each updating frame spacing, change of the disparity information following interpolation processing in the temporal direction can be smoothed, and an unnatural sensation of the transition of disparity applied between the left eye subtitles and right eye subtitles becoming discontinuous at each updating frame spacing can be suppressed.

Though not described above, in the event that the set top box 200 is a 3D-compatible device, a configuration may be conceived in which the user can select the two-dimensional display mode or the three-dimensional display mode. In this case, in the event that the three-dimensional display mode is selected, the bit stream processing unit 201 is the same configuration and operation as with the above-described the 3D-compatible bit stream processing unit 201 (see Fig. 41). On the other hand, in the event that the two-dimensional display mode is selected, the bit stream processing unit 201 is substantially the same configuration and operation as with the above-described the 2D-compatible bit stream processing unit 201 (see Fig. 45).

[Description of Television Receiver]

Returning to Fig. 1, the television receiver 300, in a case of being a 3D-compatible device, receives stereoscopic image data transmitted from the set top box 200 via the HDMI cable 400. This television receiver 300 includes a 3D signal processing unit 301. This 3D signal processing unit 301 subjects the stereoscopic image data to processing (decoding processing) corresponding to the transmission format to generate left eye image data and right eye image data.

[Configuration Example of Television Receiver]

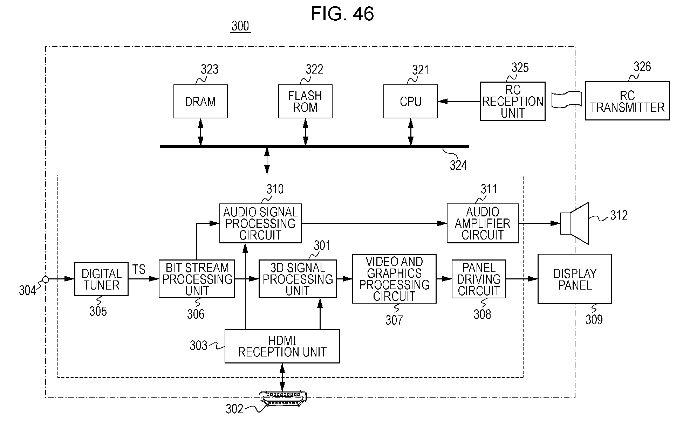

A configuration example of a 3D-compatible television receiver 300 will be described. Fig. 46 illustrates a configuration example of the television receiver 300. This television receiver 300 includes a 3D signal processing unit 301, an HDMI terminal 302, an HDMI reception unit 303, an antenna terminal 304, a digital tuner 305, and a bit stream processing unit 306.

Also, this television receiver 300 includes a video and graphics processing circuit 307, a panel driving circuit 308, a display panel 309, an audio signal processing circuit 310, an audio amplifier circuit 311, and a speaker 312. Also, this television receiver 300 includes a CPU 321, flash ROM 322, DRAM 323, internal bus 324, a remote control reception unit (RC reception unit) 325, and a remote control transmitter (RC transmitter) 326.

The antenna terminal 304 is a terminal for inputting a television broadcasting signal received at a reception antenna (not illustrated). The digital tuner 305 processes the television broadcasting signal input to the antenna terminal 304, and outputs transport stream (bit stream data) TS corresponding to the user's selected channel.

The bit stream processing unit 306 outputs output stereoscopic image data and audio data where the subtitle has been superimposed, based on the transport stream TS. While detailed description will be omitted, this bit stream processing unit 201 is of a configuration similar to, for example, the 3D-compatible bit stream processing unit 201 of the above-described set top box 200 (see Fig. 41). This bit stream processing unit 306 synthesizes the display data of left eye subtitles and right eye subtitles onto stereoscopic image data, so as to generate output stereoscopic image data with subtitles superimposed thereupon, and outputs.

Note that in the event that the transmission format of the stereoscopic image data is, for example, the side by side format or the top and bottom format, the bit stream processing unit 306 performs scaling processing and outputs left eye image data and right eye image data of full resolution. Also, the bit stream processing unit 306 outputs the audio data corresponding to the image data.

The HDMI reception unit 303 receives uncompressed image data and audio data supplied to the HDMI terminal 302 via the HDMI cable 400 by communication conforming to HDMI. This HDMI reception unit 303 of which the version is, for example, HDMI 1.4a, is in a state in which the stereoscopic image data can be handled.

The 3D signal processing unit 301 subjects the stereoscopic image data received at the HDMI reception unit 303 to decoding processing and generates full-resolution left eye image data and right eye image data. The 3D signal processing unit 301 performs decoding processing corresponding to the TMDS transmission data format. Note that the 3D signal processing unit 301 does not do anything to full-resolution left eye image data and right eye image data obtained at the bit stream processing unit 306.

The video and graphics processing circuit 307 generates image data for displaying a stereoscopic image based on the left eye image data and right eye image data generated at the 3D signal processing unit 301. Also, the video and graphics processing circuit 307 subjects the image data to image quality adjustment processing according to need.

Also, the video and graphics processing circuit 307 synthesizes the data of superposition information, such as menus, program listings, and so forth, as to the image data according to need. The panel driving circuit 308 drives the display panel 309 based on the image data output from the video and graphics processing circuit 307. The display panel 309 is configured of, for example, an LCD (Liquid Crystal Display), PDP (Plasma Display Panel), or the like.

The audio signal processing circuit 310 subjects the audio data received at the HDMI reception unit 303 or obtained at the bit stream processing unit 306 to necessary processing such as D/A conversion or the like. The audio amplifier circuit 311 amplifies the audio signal output from the audio signal processing circuit 310, supplies to the speaker 312.

The CPU 321 controls the operation of each unit of the television receiver 300. The flash ROM 322 performs storing of control software and storing of data. The DRAM 323 makes up the work area of the CPU 321. The CPU 321 loads the software and data read out from the flash ROM 322 to the DRAM 323, starts up the software, and controls each unit of the television receiver 300.

The RC reception unit 325 receives the remote control signal (remote control code) transmitted from the RC transmitter 326, and supplies to the CPU 321. The CPU 321 controls each unit of the television receiver 300 based on this remote control code. The CPU 321, flash ROM 322, and DRAM 323 are connected to the internal bus 324.

The operations of the television receiver 300 illustrated in Fig. 46 will briefly be described. The HDMI reception unit 303 receives the stereoscopic image data and audio data transmitted from the set top box 200 connected to the HDMI terminal 302 via the HDMI cable 400. The stereoscopic image data received at this HDMI reception unit 303 is supplied to the 3D signal processing unit 301. Also, the audio data received at this HDMI reception unit 303 is supplied to the audio signal processing circuit 310.

The television broadcasting signal input to the antenna terminal 304 is supplied to the digital tuner 305. With this digital tuner 305, the television broadcasting signal is processed, and transport stream (bit stream data) TS corresponding to the user's selected channel is output. This transport stream TS is supplied to the bit stream processing unit 306.

With the bit stream processing unit 306, the output stereoscopic image data and audio data where subtitles have been superimposed are obtained, based on a video data stream, audio data stream, and further, 2D stream, 3D extended stream, and 3D stream. Also, in this case, display data of left eye subtitles and right eye subtitles is synthesized onto the stereoscopic image data, and output stereoscopic image data with subtitles superimposed (full-resolution left eye image data and right eye image data) is generated. This output stereoscopic image data is supplied to the video and graphics processing circuit 307 via the 3D signal processing unit 301.

With the 3D signal processing unit 301, the stereoscopic image data received at the HDMI reception unit 303 is subjected to decoding processing, and full-resolution left eye image data and right eye image data are generated. The left eye image data and right eye image data are supplied to the video and graphics processing circuit 307. With this video and graphics processing circuit 307, image data for displaying a stereoscopic image is generated based on the left eye image data and right eye image data, and image quality adjustment processing, and synthesizing processing of superimposing information data such as OSD (on-screen display) and so forth is also performed according to need.

The image data obtained at this video and graphics processing circuit 307 is supplied to the panel driving circuit 308. Accordingly, a stereoscopic image is displayed on the display panel 309. For example, a left eye image according to left eye image data, and a right eye image according to right eye image data are alternately displayed on the display panel 309 in a time-sharing manner. The viewer can view the left eye image alone by the left eye, and the right eye image alone by the right eye, and consequently can sense the stereoscopic image by, for example, wearing shutter glasses wherein the left eye shutter and right eye shutter are alternately opened in sync with display of the display panel 309.

Also, the audio data obtained at the bit stream processing unit 306 is supplied to the audio signal processing circuit 310. At the audio signal processing circuit 310, the audio data received at the HDMI reception unit 303 or obtained at the bit stream processing unit 306 is subjected to necessary processing such as D/A conversion or the like. This audio data is amplified at the audio amplifier circuit 311, and then supplied to the speaker 312. Accordingly, audio corresponding to the display image of the display panel 309 is output from the speaker 312.

Note that Fig. 46 is the 3D-compatible television receiver 300 as described above. While detailed description will be omitted, the legacy 2D-compatible television receiver has generally the same configuration. However, in the case of the legacy 2D-compatible television receiver, the bit stream processing unit 306 has a similar configuration and operation as the 2D-compatible bit stream processing unit 201 shown in above-mentioned Fig. 45. Also, in the case of the legacy 2D-compatible television receiver, the 3D signal processing unit 301 is unnecessary.

Also, with the 3D-compatible television receiver 300, a configuration may be conceived in which the user can select a two-dimension display mode or three-dimension display mode. In such case, in the event that the three-dimension display mode is selected, the bit stream processing unit 306 is the similar configuration and operation as described above. On the other hand, in the event that the two-dimension display mode is selected, the bit stream processing unit 306 is of a configuration and operation similar to that of the 2D-compatible bit stream processing unit 201 shown in the above-described Fig. 45.

<2. Modification>

Note that with the set top box 200 shown in Fig. 40, an arrangement provided with the antenna input terminal 203 to be connected to the digital tuner 204 has been shown. However, a set-top box to which RF signals transmitted through a cable are input can be constructed in the same way. In such case, a cable terminal is provided instead of the antenna terminal 203.

Also, the set-top box where the Internet, a home network can be directly connected, or they are connected via a router can be similarly configured. That is to say, in such case, the above described transport stream TS is sent to the set top box, directly from the Internet or home network, or via a router therefrom.

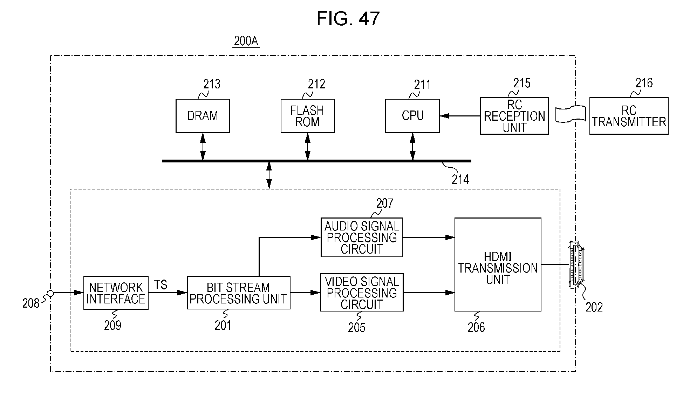

Fig. 47 is a diagram illustrating a configuration example of the set top box 200A in such a case. The portions in this Fig. 47 which correspond to those in Fig. 40 are denoted with the same reference numerals. This set top box 200A has a network terminal 208 connected to a network interface 209. The transport stream TS is output from this network interface 209 and is supplied to the bit stream processing unit 201. While detailed description will be omitted, this set top box 200A is otherwise configured the same as with the set top box 200 shown in Fig. 40 and performs the same operations.

Also, with the television receiver 300 shown in Fig. 46, an arrangement provided with the antenna input terminal 304 to be connected to the digital tuner 204 has been shown. However, a television receiver to which RF signals transmitted through a cable are input can also be configured in the same way. In such case, a cable terminal is provided instead of the antenna terminal 304.

Also, a television receiver which is connected directly to the Internet or a home network, or via a router therefrom, can be configured in the same way. That is to say, in such case, the above-mentioned transport streams TS are sent to the television receiver directly from the Internet or home network, or via a router therefrom.

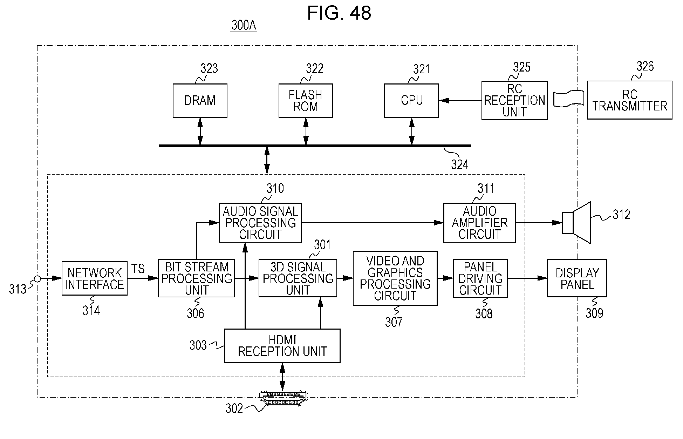

Fig. 48 is a diagram illustrating a configuration example of the television receiver 300A in such a case. The portions in this Fig. 48 which correspond to those in Fig. 46 are denoted with the same reference numerals. This television receiver 300A has a network terminal 313 connected to a network interface 314. The transport stream TS is output from this network interface 314 and is supplied to the bit stream processing unit 306. While detailed description will be omitted, this television receiver 300A is otherwise configured the same as with the television receiver 300 shown in Fig. 46 and performs similar operations.

Also, with the above-described embodiment, the image transmission/reception system 10 has been illustrated as being configured of a broadcasting station 100, set top box 200, and television receiver 300. However, the television receiver 300 has a bit stream processing unit 306 functioning in the same way as the bit stream processing unit 201 within the set top box 200 as shown in Fig. 46. Accordingly, an image transmission/reception system 10A configured of the broadcasting station 100 and television receiver 300 is also conceivable, as shown in Fig. 49.

Also, with the above-described embodiment, an example has been illustrated where the set top box 200 and television receiver 300 are connected by an HDMI digital interface. However, the present invention can be similarly applied to a case where these are connected by a digital interface similar to an HDMI digital interface (including, in addition to cable connection, wireless connection).

Also, with the above-described embodiment, an example has been illustrated where subtitles (captions) are handled as superimposing information. However, the present invention can be similarly applied to arrangements handling that which is encoded such that that which is divided into a basic stream and additional stream, including superimposing information such as other graphic information, text information, and so forth, are output in a related manner, and also handling relating to audio streams.

Also, the present technology may have the following configurations.

(1) A transmission device including:

an image data output unit configured to output left eye image data and right eye image data for displaying a stereoscopic image;
a superimposing information data output unit configured to output data of superimposing information to be superimposed on an image of the left eye image data and the right eye image data;
a disparity information output unit configured to output disparity information which shifts and provides disparity to superimposing information to be superimposed on an image of the left eye image data and the right eye image data; and
a data transmission unit configured to transmit a multiplexed stream having a video data stream including image data output from the image data output unit, a first private data stream including data of superimposing information output from the superimposing information data output unit, and a second private data stream including disparity information output from the disparity information output unit.

(2) The transmission device according to (1), wherein the first private data stream and second private data stream include therein synchronizing information for synchronizing display by data of the superimposing information and shift control by the disparity information.
(3) The transmission device according to (1) or (2), wherein the disparity information is disparity information sequentially updated within a period of a predetermined number of frames during which the superimposing information is displayed, and is made up of disparity information of a first frame of the period of predetermined number of frames, and disparity information of subsequent frames every updating frame spacing.
(4) The transmission device according to any one of (1) through (3), wherein the data of superimposing information is DVB format subtitle data;
and wherein the disparity information is disparity information in increments of regions or increments of sub regions included in the regions, or in increments of pages including all the regions.
(5) The transmission device according to any one of (1) through (4), wherein the multiplexed stream has inserted therein correlation information for correlating the first private data stream and second private data stream.
(6) A transmission method, including:

an image data output step to output left eye image data and right eye image data for displaying a stereoscopic image;

a superimposing information data output step to output data of superimposing information to be superimposed on an image of the left eye image data and the right eye image data;

a disparity information output step to output disparity information which shifts and provides disparity to superimposing information to be superimposed on an image of the left eye image data and the right eye image data; and

a data transmission step to transmit a multiplexed stream having a video data stream including image data output in the image data output step, a first private data stream including data of superimposing information output in the superimposing information data output step, and a second private data stream including disparity information output in the disparity information output step.

(7) A transmission device including:

an image data output unit configured to output left eye image data and right eye image data for displaying a stereoscopic image;

a superimposing information data output unit configured to output data of superimposing information to be superimposed on an image of the left eye image data and the right eye image data;

a disparity information output unit configured to output disparity information which shifts and provides disparity to superimposing information to be superimposed on an image of the left eye image data and the right eye image data; and

a data transmission unit configured to transmit a multiplexed stream having a video data stream including image data output from the image data output unit, a first private data stream including data of superimposing information output from the superimposing information data output unit, and a second private data stream including superimposing information data output from the superimposing information data output unit and disparity information output from the disparity information output unit.

(8) The transmission device according to (7), wherein the disparity information is disparity information sequentially updated within a period of a predetermined number of frames during which the superimposing information is displayed, and is made up of disparity information of a first frame of the period of predetermined number of frames, and disparity information of subsequent frames every updating frame spacing.

(9) The transmission device according to (7) or (8), wherein the data of superimposing information is DVB format subtitle data;

and wherein the disparity information is disparity information in increments of regions or increments of sub regions included in the regions, or in increments of pages including all the regions.

(10) A transmission method, including:

an image data output step to output left eye image data and right eye image data for displaying a stereoscopic image;

a superimposing information data output step to output data of superimposing information to be superimposed on an image of the left eye image data and the right eye image data;

a disparity information output step to output disparity information which shifts and provides disparity to superimposing information to be superimposed on an image of the left eye image data and the right eye image data; and

a data transmission step to transmit a multiplexed stream having a video data stream including image data output in the image data output step, a first private data stream including superimposing information data output in the superimposing information data output step, and a second private data stream including the superimposing information data output in the superimposing information data output step and disparity information output in the disparity information output step.

(11) A reception device, including:

a data reception unit configured to receive a multiplexed data stream having a video data stream, a first private data stream, and a second private data stream;

wherein the video data stream includes left eye image data and right eye image data for displaying a stereoscopic image;

and wherein the first private data stream includes data of superimposing information to be superimposed on images according to the left eye image data and the right eye image data;

and wherein the second private data stream includes disparity information for providing disparity by shifting the superimposing information superimposed on the image according to the left eye image data and the right eye image data;
and further including:

an information acquiring unit; and
an image data processing unit;

wherein the information acquiring unit extracts the video data stream from the multiplexed data stream received at the data reception unit and acquires the image data included in the video data stream, extracts the first private data stream from the multiplexed data stream received at the data reception unit, and acquires data of the superimposing information from the first private data stream, and extracts the second private data stream from the multiplexed data stream received at the data reception unit, and acquires the disparity information from the second private data stream; and wherein the image data processing unit uses the image data, data of the superimposing information, and the disparity information, acquired at the information acquiring unit, provides disparity to the same superimposing information superimposed on the left eye image and right eye image, and obtains left eye image data on which the superimposing information has been superimposed and right eye image data on which the superimposing information has been superimposed.

(12) The reception device according to (11), wherein the multiplexed data stream has inserted therein, correlation information correlating the first private data stream and the second private data stream; and wherein the information acquiring unit acquires the disparity information from the second private data stream, along with acquiring the superimposing information data from the first private data stream, based on the correlation information.

(13) The reception device according to (11) or (12), wherein the disparity information is disparity information sequentially updated within a period of a predetermined number of frames during which the superimposing information is displayed; and wherein the image data processing unit subjects disparity information of a plurality of frames, sequentially updated during the period of a predetermined number of frames, to interpolation processing, and generates and uses disparity information of an arbitrary frame spacing during the period of a predetermined number of frames.

(14) A reception device, including:

a data reception unit configured to receive a multiplexed data stream having a video data stream, a first private data stream, and a second private data stream; wherein the video data stream includes left eye image data and right eye image data for displaying a stereoscopic image; and wherein the first private data stream includes data of superimposing information to be superimposed on images according to the left eye image data and the right eye image data; and wherein the second private data stream includes disparity information for providing disparity by shifting the superimposing information superimposed on the image according to the left eye image data and the right eye image data; and further including:

an information acquiring unit; and
an image data processing unit;
wherein the information acquiring unit,
with the two-dimensional display mode,
extracts the video data stream from the multiplexed data stream received at the data reception unit, and acquires the image data included in the video data stream, and
extracts the first private data stream from the multiplexed data stream received at the data reception unit, and acquires data of the superimposing information from the first private data stream,
in a three-dimensional display mode,
extracts the video data stream from the multiplexed data stream received at the data reception unit and acquires the image data included in the video data stream,
extracts the first private data stream from the multiplexed data stream received at the data reception unit, and acquires data of the superimposing information from the first private data stream,
and extracts the second private data stream from the multiplexed data stream received at the data reception unit, and acquires the disparity information from the second private data stream;
and wherein the image data processing unit,

in the two-dimensional display mode,
uses the image data and data of the superimposing information acquired at the information acquiring unit to obtain image data on which the superimposing information has been superimposed, and
in the three-dimensional display mode,
uses the image data, data of the superimposing information, and the disparity information, acquired at the information acquiring unit, provides disparity with the same superimposing information superimposed on the left eye image and right eye image, and obtains the left eye image data on which the superimposing information has been superimposed and right eye image data on which the superimposing information has been superimposed.

(15) The reception device, comprising:

a data reception unit configured to receive a multiplexed data stream having a video data stream, a first private data stream and a second private data stream;
wherein the video data stream includes left eye image data and right eye image data for displaying a stereoscopic image;
and wherein the first private data stream includes data of superimposing information to be superimposed on images according to the left eye image data and the right eye image data;
and wherein the second private data stream includes disparity information for providing disparity by shifting the superimposing information to be superimposed on images according to data of the superimposing information and the left eye image data and the right eye image data;
and further including:

an information acquiring unit; and
an image data processing unit;
wherein the information acquiring unit
extracts the video data stream from the multiplexed data stream received at the data reception unit and acquires the image data included in the video data stream, and
extracts the second private data stream from the multiplexed data stream received at the data reception unit, and acquires data of the superimposing information and the disparity information from the second private data stream,
and wherein the image data processing unit
uses the image data, data of the superimposing information, and the disparity information, acquired at the information acquiring unit, provides disparity with the same superimposing information superimposed on the left eye image and right eye image, and obtains the left eye image data on which the superimposing information has been superimposed and right eye image data on which the superimposing information has been superimposed.

(16) The reception device according to (15), wherein the disparity information is disparity information sequentially updated within a period of a predetermined number of frames during which the superimposing information is displayed,
and wherein the image data processing unit subjects disparity information of a plurality of frames, sequentially updated during the period of a predetermined number of frames, to interpolation processing, and generates and uses disparity information of an arbitrary frame spacing during the period of a predetermined number of frames.

(17) A reception device, including:

a data reception unit configured to receive a multiplexed data stream having a video data stream, a first private data stream, and a second private data stream;
wherein the video data stream includes left eye image data and right eye image data for displaying a stereoscopic image;
and wherein the first private data stream includes data of superimposing information to be superimposed on images according to the left eye image data and the right eye image data;
and wherein the second private data stream includes data of the superimposing information and disparity information for providing disparity by shifting the superimposing information to be superimposed on images according to the left eye image data and the right eye image data;
and further including:

an information acquiring unit; and

an image data processing unit;
wherein the information acquiring unit,
in a two-dimensional display mode,
extracts the video data stream from the multiplexed data stream received at the data reception unit, and acquires the image data included in the video data stream, and
extracts the first private data stream from the multiplexed data stream received at the data reception unit, and acquires data of the superimposing information from the first private data stream,
in a three-dimensional display mode,
extracts the video data stream from the multiplexed data stream received at the data reception unit, and acquires the image data included in the video data stream,
extracts the second private data stream from the multiplexed data stream received at the data reception unit, and acquires data of the superimposing information and the disparity information from the second private data stream,
and wherein the image data processing unit,
in the two-dimensional display mode,
uses the image data and data of the superimposing information acquired at the information acquiring unit to obtain image data on which the superimposing information has been superimposed, and
in the three-dimensional display mode,
uses the image data, data of the superimposing information, and the disparity information acquired at the information acquiring unit, provides disparity with the same superimposing information superimposed on the left eye image and right eye image, and obtains the left eye image data on which the superimposing information has been superimposed and right eye image data on which the superimposing information has been superimposed.

(18) The reception device, including:

a data reception unit configured to receive a multiplexed data stream having a video data stream, a first private data stream, and a second private data stream;
wherein the video data stream includes left eye image data and right eye image data for displaying a stereoscopic image;
and wherein the first private data stream includes data of superimposing information to be superimposed on images according to the left eye image data and the right eye image data;
and wherein the second private data stream includes disparity information for providing disparity by shifting the superimposing information to be superimposed on images according to the left eye image data and the right eye image data, or the disparity information and data of the superimposing information;
and further including:

an information acquiring unit; and
an image data processing unit;
wherein the information acquiring unit
extracts the video data stream from the multiplexed data stream received at the data reception unit and acquires the image data included in the video data stream, and
extracts the first private data stream from the multiplexed data stream received at the data reception unit, and acquires data of the superimposing information from the first private data stream,
and wherein the image data processing unit
uses the image data and data of the superimposing information acquired at the information acquiring unit to obtain the image data on which the superimposing information has been superimposed. Reference Signs List

| 10, 10A | image transmission/reception system |
| --- | --- |
| 100 | broadcasting station |
| 110 | transmission data generating unit |
| 111 | data extracting unit |
| 112 | video encoder |
| 113 | audio encoder |

(continued)

| | |
|---|---|
| 114 | subtitle generating unit |
| 115 | disparity information creating unit |
| 116 | subtitle processing unit |
| 118 | subtitle encoder |
| 119 | multiplexer |
| 200, 200A | set top box (STB) |
| 201 | bit stream processing unit |
| 202 | HDMI terminal |
| 203 | antenna terminal |
| 204 | digital tuner |
| 205 | video signal processing circuit |
| 206 | HDMI transmission unit |
| 207 | audio signal processing circuit |
| 208 | network terminal |
| 209 | network interface |
| 211 | CPU |
| 215 | remote control reception unit |
| 216 | remote control transmitter |
| 221 | demultiplexer |
| 222 | video decoder |
| 223 | subtitle decoder |
| 224 | subtitle generating unit |
| 228 | video superimposing unit |
| 229 | audio decoder |
| 300, 300A | television receiver (TV) |
| 301 | 3D signal processing unit |
| 302 | HDMI terminal |
| 303 | HDMI reception unit |
| 304 | antenna terminal |
| 305 | digital tuner |
| 306 | bit stream processing unit |
| 307 | video and graphics processing circuit |
| 308 | panel driving circuit |
| 309 | display panel |
| 310 | audio signal processing circuit |
| 311 | audio amplifying circuit |
| 312 | speaker |
| 313 | network terminal |
| 314 | network interface |
| 321 | CPU |
| 325 | remote control reception unit |
| 326 | remote control transmitter |
| 400 | HDMI cable |

**Claims**

1.  A transmission device comprising:

an image data output unit configured to output left eye image data and right eye image data for displaying a stereoscopic image;
a superimposing information data output unit configured to output data of superimposing information to be superimposed on an image of the left eye image data and the right eye image data;

a disparity information output unit configured to output disparity information which shifts and provides disparity to superimposing information to be superimposed on an image of the left eye image data and the right eye image data; and

a data transmission unit configured to transmit a multiplexed stream having a video data stream including image data output from the image data output unit, a first private data stream including data of superimposing information output from the superimposing information data output unit, and a second private data stream including disparity information output from the disparity information output unit.

2. The transmission device according to Claim 1, wherein the first private data stream and second private data stream include therein synchronizing information for synchronizing display by data of the superimposing information and shift control by the disparity information.

3. The transmission device according to Claim 1, wherein the disparity information is disparity information sequentially updated within a period of a predetermined number of frames during which the superimposing information is displayed, and is made up of disparity information of a first frame of the period of predetermined number of frames, and disparity information of subsequent frames every updating frame spacing.

4. The transmission device according to Claim 1, wherein the data of superimposing information is DVB format subtitle data;

and wherein the disparity information is disparity information in increments of regions or increments of sub regions included in the regions, or in increments of a page including all regions.

5. The transmission device according to Claim 1, wherein the multiplexed stream has inserted therein correlation information for correlating the first private data stream and second private data stream.

6. A transmission method, comprising:

an image data output step to output left eye image data and right eye image data for displaying a stereoscopic image;

a superimposing information data output step to output data of superimposing information to be superimposed on an image of the left eye image data and the right eye image data;

a disparity information output step to output disparity information which shifts and provides disparity to superimposing information to be superimposed on an image of the left eye image data and the right eye image data; and

a data transmission step to transmit a multiplexed stream having a video data stream including image data output in the image data output step, a first private data stream including data of superimposing information output in the superimposing information data output step, and a second private data stream including disparity information output in the disparity information output step.

7. A transmission device comprising:

an image data output unit configured to output left eye image data and right eye image data for displaying a stereoscopic image;

a superimposing information data output unit configured to output data of superimposing information to be superimposed on an image of the left eye image data and the right eye image data;

a disparity information output unit configured to output disparity information which shifts and provides disparity to superimposing information to be superimposed on an image of the left eye image data and the right eye image data; and

a data transmission unit configured to transmit a multiplexed stream having a video data stream including image data output from the image data output unit, a first private data stream including data of superimposing information output from the superimposing information data output unit, and a second private data stream including superimposing information data output from the superimposing information data output unit and disparity information output from the disparity information output unit.

8. The transmission device according to Claim 7, wherein the disparity information is disparity information sequentially updated within a period of a predetermined number of frames during which the superimposing information is displayed, and is made up of disparity information of a first frame of the period of predetermined number of frames, and disparity information of subsequent frames every updating frame spacing.

**9.** The transmission device according to Claim 7, wherein the data of superimposing information is DVB format subtitle data;
and wherein the disparity information is disparity information in increments of regions or increments of sub regions included in the regions, or in increments of pages including all the regions.

**10.** A transmission method, comprising:

an image data output step to output left eye image data and right eye image data for displaying a stereoscopic image;
a superimposing information data output step to output data of superimposing information to be superimposed on an image of the left eye image data and the right eye image data;
a disparity information output step to output disparity information which shifts and provides disparity to superimposing information to be superimposed on an image of the left eye image data and the right eye image data; and
a data transmission step to transmit a multiplexed stream having a video data stream including image data output in the image data output step, a first private data stream including superimposing information data output in the superimposing information data output step, and a second private data stream including the superimposing information data output in the superimposing information data output step and disparity information output in the disparity information output step.

**11.** A reception device comprising:

a data reception unit configured to receive a multiplexed data stream having a video data stream, a first private data stream, and a second private data stream;
wherein the video data stream includes left eye image data and right eye image data for displaying a stereoscopic image;
and wherein the first private data stream includes data of superimposing information to be superimposed on images according to the left eye image data and the right eye image data;
and wherein the second private data stream includes disparity information for providing disparity by shifting the superimposing information to be superimposed on images according to the left eye image data and the right eye image data;
and further comprising:

an information acquiring unit; and
an image data processing unit;
wherein the information acquiring unit extracts the video data stream from the multiplexed data stream received at the data reception unit, and acquires the image data included in the video data stream,
extracts the first private data stream from the multiplexed data stream received at the data reception unit, and acquires data of the superimposing information from the first private data stream,
and extracts the second private data stream from the multiplexed data stream received at the data reception unit, and acquires the disparity information from the second private data stream;
and wherein the image data processing unit uses the image data, data of the superimposing information, and the disparity information, acquired at the information acquiring unit, provides disparity to the same superimposing information superimposed on the left eye image and right eye image, and obtains left eye image data on which the superimposing information has been superimposed and right eye image data on which the superimposing information has been superimposed.

**12.** The reception device according to Claim 11, wherein the multiplexed data stream has inserted therein correlation information correlating the first private data stream and the second private data stream;
and wherein the information acquiring unit acquires the disparity information from the second private data stream, along with acquiring the superimposing information data from the first private data stream, based on the correlation information.

**13.** The reception device according to Claim 11, wherein the disparity information is disparity information sequentially updated within a period of a predetermined number of frames during which the superimposing information is displayed;
and wherein the image data processing unit subjects disparity information of a plurality of frames, sequentially updated during the period of a predetermined number of frames, to interpolation processing, and generates and uses disparity information of an arbitrary frame spacing during the period of a predetermined number of frames.

**14.** A reception device, comprising:

a data reception unit configured to receive a multiplexed data stream having a video data stream, a first private data stream, and a second private data stream;

wherein the video data stream includes left eye image data and right eye image data for displaying a stereoscopic image;

and wherein the first private data stream includes data of superimposing information to be superimposed on images according to the left eye image data and the right eye image data;

and wherein the second private data stream includes disparity information for providing disparity by shifting the superimposing information to be superimposed on images according to the left eye image data and the right eye image data;

and further comprising:

an information acquiring unit; and
an image data processing unit;
wherein the information acquiring unit,
in a two-dimensional display mode,
extracts the video data stream from the multiplexed data stream received at the data reception unit, and acquires the image data included in the video data stream, and
extracts the first private data stream from the multiplexed data stream received at the data reception unit, and acquires data of the superimposing information from the first private data stream, and
in a three-dimensional display mode,
extracts the video data stream from the multiplexed data stream received at the data reception unit, and acquires the image data included in the video data stream,
extracts the first private data stream from the multiplexed data stream received at the data reception unit, and acquires data of the superimposing information from the first private data stream,
and extracts the second private data stream from the multiplexed data stream received at the data reception unit, and acquires the disparity information from the second private data stream;
and wherein the image data processing unit,
in the two-dimensional display mode,
uses the image data and data of the superimposing information acquired at the information acquiring unit to obtain image data on which the superimposing information has been superimposed, and
in the three-dimensional display mode,
uses the image data, data of the superimposing information, and the disparity information, acquired at the information acquiring unit, provides disparity with the same superimposing information superimposed on the left eye image and right eye image, and obtains the left eye image data on which the superimposing information has been superimposed and right eye image data on which the superimposing information has been superimposed.

**15.** A reception device, comprising:

a data reception unit configured to receive a multiplexed data stream having a video data stream, a first private data stream and a second private data stream;

wherein the video data stream includes left eye image data and right eye image data for displaying a stereoscopic image;

and wherein the first private data stream includes data of superimposing information to be superimposed on images according to the left eye image data and the right eye image data;

and wherein the second private data stream includes disparity information for providing disparity by shifting the superimposing information to be superimposed on the images according to data of the superimposing information and the left eye image data and the right eye image data;

and further comprising:

an information acquiring unit; and
an image data processing unit;
wherein the information acquiring unit
extracts the video data stream from the multiplexed data stream received at the data reception unit and acquires the image data included in the video data stream, and
extracts the second private data stream from the multiplexed data stream received at the data reception unit, and acquires data of the superimposing information and the disparity information from the second private data stream,

and wherein the image data processing unit

uses the image data, data of the superimposing information, and the disparity information, acquired at the information acquiring unit, provides disparity with the same superimposing information superimposed on the left eye image and right eye image, and obtains the left eye image data on which the superimposing information has been superimposed and right eye image data on which the superimposing information has been superimposed.

16. The reception device according to Claim 15, wherein the disparity information is disparity information sequentially updated within a period of a predetermined number of frames during which the superimposing information is displayed,

and wherein the image data processing unit subjects disparity information of a plurality of frames, sequentially updated during the period of a predetermined number of frames, to interpolation processing, and generates and uses disparity information of an arbitrary frame spacing during the period of a predetermined number of frames.

17. A reception device, comprising:

a data reception unit configured to receive a multiplexed data stream having a video data stream, a first private data stream, and a second private data stream;

wherein the video data stream includes left eye image data and right eye image data for displaying a stereoscopic image;

and wherein the first private data stream includes data of superimposing information to be superimposed on images according to the left eye image data and the right eye image data;

and wherein the second private data stream includes data of the superimposing information and disparity information for providing disparity by shifting the superimposing information to be superimposed on the image according to the left eye image data and the right eye image data;

and further comprising:

an information acquiring unit; and

an image data processing unit;

wherein the information acquiring unit,

in a two-dimensional display mode,

extracts the video data stream from the multiplexed data stream received at the data reception unit, and acquires the image data included in the video data stream, and

extracts the first private data stream from the multiplexed data stream received at the data reception unit, and acquires data of the superimposing information from the first private data stream, and

in a three-dimensional display mode,

extracts the video data stream from the multiplexed data stream received at the data reception unit, and acquires the image data included in the video data stream, and

extracts the second private data stream from the multiplexed data stream received at the data reception unit, and acquires data of the superimposing information and the disparity information from the second private data stream,

and wherein the image data processing unit,

in the two-dimensional display mode,

uses the image data and data of the superimposing information acquired at the information acquiring unit to obtain image data on which the superimposing information has been superimposed, and

in the three-dimensional display mode,

uses the image data, data of the superimposing information, and the disparity information, acquired at the information acquiring unit, provides disparity with the same superimposing information superimposed on the left eye image and right eye image, and obtains the left eye image data on which the superimposing information has been superimposed and right eye image data on which the superimposing information has been superimposed.

18. A reception device, comprising:

a data reception unit configured to receive a multiplexed data stream having a video data stream, a first private data stream, and a second private data stream;

wherein the video data stream includes left eye image data and right eye image data for displaying a stereoscopic image;

and wherein the first private data stream includes data of superimposing information to be superimposed on images according to the left eye image data and the right eye image data;

and wherein the second private data stream includes disparity information for providing disparity by shifting the superimposing information to be superimposed on images according to the left eye image data and the right eye image data, or the disparity information and data of the superimposing information;

and further comprising:

an information acquiring unit; and
an image data processing unit;
wherein the information acquiring unit
extracts the video data stream from the multiplexed data stream received at the data reception unit and acquires the image data included in the video data stream, and
extracts the first private data stream from the multiplexed data stream received at the data reception unit, and acquires data of the superimposing information from the first private data stream,
and wherein the image data processing unit
uses the image data and data of the superimposing information acquired at the information acquiring unit to obtain image data on which the superimposing information has been superimposed.

# FIG. 1

# FIG. 2

# FIG. 3

EXAMPLE OF STEREOSCOPIC IMAGE DATA

L

1920x1080

R

1920x1080

# FIG. 4

"Top & Bottom" FORMAT

(a)

L

R

1920x1080 i/p

"Side By Side" FORMAT

(b)

L          R

1920x1080 i/p

"Frame Sequential" FORMAT

(c)

L

1920x1080 i/p

R

1920x1080 i/p

# FIG. 5

Block Bi          Block Bj

(xi'−xi, yi'−yi)

(xi,yi)

(xj,yj)

(xj'−xj,yj'−yj)

RIGHT EYE IMAGE
(REFERENCE IMAGE)

LEFT EYE IMAGE
(DETECTION IMAGE)

# FIG. 6

RIGHT EYE IMAGE

LEFT EYE IMAGE

R(x,y)     COMPARISON BLOCK

(xi,yi)

SEARCH RANGE

L(x,y)     Bi

# FIG. 7

DISPARITY VECTOR (EACH PIXEL)

PICTURE

# FIG. 8

## DISPARITY VECTOR (EACH BLOCK)

# FIG. 9

DOWNSIZING PROCESSING

(a)

Block

(b)

Group of Block

Block

(c)

Group of Block

Partition

(d)

Picture

Partition

FIG. 10

DSS disparity assignment
To subregion

Region_
Starting
Position R0

Region 0

(a)

SubRegion 1
Horizontal
Position
(x = SR1)

SubRegion 2
Horizontal
Position
(x = SR2)

SubRegion 1
(disparity1)

SubRegion 2
(disparity2)

For Left view

Region_
Starting
Position R0

(b)

SubRegion 1
Horizontal
Position
(x = SR1 − disparity1)

SubRegion 2
Horizontal
Position
(x = SR2 − disparity2)

For Right view

Region_
Starting
Position
R0

(c)

SubRegion 1
Horizontal
Position
(x = SR1 + disparity1)

SubRegion 2
Horizontal
Position
(x = SR2 + disparity2)

## FIG. 11

(a) 2D stream

PES payload

| PES Header | DDS | PCS | RCS | CDS | ODS | EDS |

(b) 3D EXTENDED stream

PES payload

| PES Header | DDS | DSS | EDS |

# FIG. 12

PES payload

(a) 2D stream

| PES Header | DDS | PCS | RCS | CDS | ODS | EDS |

PES payload

(b) 3D stream

| PES Header | DDS | PCS | RCS | DSS | CDS | ODS | EDS |

FIG. 13

DISPLAY AT TIMING OF
Decoder Clock＝PTS

Timing1 (PTS1)                    Time

ID1;                    ID2:
PES1(1)                PES2(2)

PES#1                   PES#2                    2D subtitle

| PTS1 | Conventional Segments |     | PTS1 | Extended Segments |

3D extended
control                    Disparity value interpolation

Disparity                                        Disparity
Plot                                             Plot

DISPLAY TIMING
OF CAPTION PATTERN

PES1(1) : PES#1 packet with PTS1
PES2(1) : PES#2 packet with PTS1

46

FIG. 14

DISPLAY AT TIMING OF
Decoder Clock＝PTS

Time

Timing1 (PTS1)    Timing2 (PTS2)

ID1;
PES1(1)

ID2:
PES2(2)

2D subtitle

PES#1

PES#2

3D extended
control

PTS1    Conventional
Segments

PTS2    Extended
Segments

Disparity value interpolation

DISPLAY TIMING
OF CAPTION
PATTERN

Disparity
Plot

......

Disparity
Plot

PES1(1) : PES#1 packet with PTS1

3D DISPLAY TIMING

PES2(2) : PES#2 packet with PTS2

FIG. 15

DISPLAY AT TIMING OF
Decoder Clock=PTS                                          Time

                                                    (PTS3)
                                                    (PTS4)
                    (PTS1)              (PTS2)       (PTS5)

2D subtitle

3D extended
control

                            DISPLAY TIMING      Disparity value interpolation
                            OF CAPTION          Disparity                Disparity
                            PATTERN             Plot                     Plot

                                                        3D DISPLAY TIMING

ID1;
PES1(1)

| PES#1 | | PTS2 | PTS3 | PTS4 | PTS5 |
|---|---|---|---|---|---|

| PTS1 | Conventional Segments | | ID2: PES 2(2) | ID2: PES 2(3) | ID2: PES 2(4) | ID2: PES 2(5) |

48

## FIG. 16

Transport Stream

PMT

EIT

Component descriptor
(stream_content = subtitle,
component_type = 2D,
component_tag = 0x1a)

Component descriptor
(stream_content = subtitle,
component_type = 3D,
component_tag = 0x2a)

Subtitle ES loop

PID1: Subtitle PES1

DDS  PCS  RCS
CDS  ODS  EDS

Segments
(page_id = 0xXXXX)

PID2: Subtitle PES2

DDS  DSS  EDS

Segments
(page_id = 0xXXXX)

Stream_type (= private1 "subtitle")
Elementary PID (PID1)
Subtitle descriptor
    (Subtitling_type = 2D, composition_page_id = 0xXXXX)
Stream_identifier descriptor
    component_tag (= 0x1a)

Stream_type (= private1 "subtitle")
Elementary PID (PID2)
Subtitle descriptor
    (Subtitling_type = 3D, composition_page_id = 0xXXXX)
Stream_identifier descriptor
    component_tag (= 0x2a)

FIG. 17

DVB subtitles page_composition_segment

| Syntax | No. of Bits | Format |
|---|---|---|
| page_composition_segment() { | | |
| sync_byte | 8 | bslbf |
| segment_type | 8 | bslbf |
| page_id | 16 | bslbf |
| segment_length | 16 | uimsbf |
| page_time_out | 8 | uimsbf |
| page_version_number | 4 | uimsbf |
| page_state | 2 | bslbf |
| reserved | 2 | bslbf |
| while (processed_length < segment_length) { | | |
| region_id | 8 | bslbf |
| reserved | 8 | bslbf |
| region_horizontal_address | 16 | uimsbf |
| region_vertical_address | 16 | uimsbf |
| } | | |
| } | | |

# FIG. 18

DVB subtitles segment_type

| DVB subtitles segment_type | Segment |
|---|---|
| 0x10 | page composition segment |
| 0x11 | region composition segment |
| 0x12 | CLUT definition segment |
| 0x13 | object data segment |
| 0x14 | display definition segment |
| **0x15 (*)** | **disparity signaling segment** |
| 0x41 - 0x7F | reserved for future use |
| 0x80 | end of display set segment |
| 0x81 – 0xEF | private data |
| 0xFF | stuffing (see note) |
| All other values | reserved for future use |

(*) Newly introduced

## FIG. 19

Component descriptor    3D EXTENSION OF Component_type

Stream_content

Component_type                                    Description

| 0x03 | 0x10 | DVB subtitles (normal) with no monitor aspect ratio criticality |
| 0x03 | 0x11 | DVB subtitles (normal) for display on 4:3 aspect ratio monitor |
| 0x03 | 0x12 | DVB subtitles (normal) for display on 16:9 aspect ratio monitor |
| 0x03 | 0x13 | DVB subtitles (normal) for display on 2.21:1 aspect ratio monitor |
| 0x03 | 0x14 | DVB subtitles (normal) for display on a high definition monitor |
| 0x03 | 0x15 | DVB subtitles (normal) for display on a 3D high definition monitor |
| | | |
| 0x03 | 0x20 | DVB subtitles (for the hard of hearing) with no monitor aspect ratio criticality |
| 0x03 | 0x21 | DVB subtitles (for the hard of hearing) for display on 4:3 aspect ratio monitor |
| 0x03 | 0x22 | DVB subtitles (for the hard of hearing) for display on 16:9 aspect ratio monitor |
| 0x03 | 0x23 | DVB subtitles (for the hard of hearing) for display on 2.21:1 aspect ratio monitor |
| 0x03 | 0x24 | DVB subtitles (for the hard of hearing) for display on a high definition monitor |
| 0x03 | 0x25 | DVB subtitles (for the hard of hearing) for display on a 3D high definition monitor |

## FIG. 20

```
Transport Stream
```

```
PMT        EIT    Component descriptor
                  (stream_content = subtitle,
                  component_type = 2D,
                  component_tag = 0x1a)

                  Component descriptor
                  (stream_content = subtitle,
      Subtitle ES loop     component_type = 3D,
                  component_tag = 0x2a)
```

```
PID1: Subtitle PES1    DDS  PCS  RCS
                      CDS  ODS  EDS

            Segments
               (page_id = 0xXXXX)


PID2: Subtitle PES2    DDS  PCS  RCS  DSS
                      CDS  ODS  EDS

            Segments
               (page_id = 0xYYYY)
```

```
Stream_type (= private1 "subtitle")
Elementary PID (PID1)
Subtitle descriptor
    (Subtitling_type = 2D, composition_page_id = 0xXXXX)
Stream_identifier descriptor
    component_tag (= 0x1a)
```

```
Stream_type (= private1 "subtitle")
Elementary PID (PID2)
Subtitle descriptor
    (Subtitling_type = 3D, composition_page_id = 0xYYYY)
Stream_identifier descriptor
    component_tag (= 0x2a)
```

# FIG. 21

Disparity Temporal Update sequence in DSS

Interval Period = Vertex Time Distance

# FIG. 22

Disparity Temporal Update sequence in DSS

Interval
Period (IP)

\*M    \*N    \*P    \*Q    \*R

0

Disparity

A

B

C

D    E

F

Arbitrary Disparity Variant

Time

FIG. 23

Packet structure for subtitle

| PES header | PES data payload |
| --- | --- |

(a)

| PTS | | DDS | PCS | RCS | DSS | CDS | ODS | EDS |

(b)

| PTS | | DDS | PCS | RCS | CDS | ODS | DSS | DSS | DSS | DSS | DSS | DSS | EDS |

# FIG. 24

Disparity Temporal Update

Arbitrary Disparity Variant

# FIG. 25

Disparity Temporal Update

# FIG. 26

Displaying subtitles
(EXAMPLE OF ONE page AREA+TWO region UNITS)

Region1
with subregion

Region2
with subregion

Area for
Page_default

# FIG. 27

Disparity Temporal Update

(Example of disparity update applying to page_default + 2 regions)

# FIG. 28

Structure of disparity update sequence overview

Page layer
- page_default_disparity
- T0_0 : interval_count
    disparity_page_update
        :
  T0_6 : interval_count
    disparity_page_update
Region layer
    region1 (subregion1)
- subregion_disparity_integer_part
  subregion_disparity_fractional_part
- T1_0 : interval_count
        disparity_region_update_integer_part
        disparity_region_update_fractional_part
            :
  T1_6 : interval_count
            disparity_region_update_integer_part
        disparity_region_update_fractional_part

    region2 (subregion1)
- subregion_disparity_integer_part
  subregion_disparity_fractional_part
- T2_0 : interval_count
        disparity_region_update_integer_part
        disparity_region_update_fractional_part
            :
  T2_7 : interval_count
        disparity_region_update_integer_part
        disparity_region_update_fractional_part

## FIG. 29

DSS syntax (1)

| Syntax | Size | Type |
|---|---|---|
| disparity_signalling_segment() { | | |
|   sync_byte | 8 | bslbf |
|   segment_type | 8 | bslbf |
|   page_id | 16 | bslbf |
|   segment_length | 16 | uimbbf |
|   dss_version_number | 4 | uimbdf |
|   disparity_shift_update_sequence_page_flag | 1 | bslbf |
|   reserved | 3 | bslbf |
|   page_default_disparity_shift | 8 | tcimsbf |
|   if (disparity_shift_update_sequence_page_flag ==1) { | | |
|     disparity_shift_update_sequence() | | |
|   } | | |
|   while (processed_length<segment_length) { | | |
|     region_id | 8 | uimsbf |
|     disparity_shift_update_sequence_region_flag | 1 | bslbf |
|     reserved | 5 | bslbf |
|     number_of_subregions_minus_1 | 2 | Uimsdf |
| /* syntax continued to next page */ | | |

FIG. 30

DSS syntax (2)

| Syntax | Size | Type |
|---|---|---|
| for (n=0; n<= number_of_subregions_minus_1; n++) { | | |
| if (number_of_subregions_minus_1 > 0) { | | |
| subregion_horizontal_position | 16 | uimsbf |
| subregion_width | 16 | uimsbf |
| } | | |
| subregion_disparity_shift_integer_part | 8 | tcimbsf |
| subregion_disparity_shift_fractional_part | 4 | uimbsf |
| reserved | 4 | uimbsf |
| if (disparity_shift_update_sequence_region_flag ==1) { | | |
| disparity_shift_update_sequence() | | |
| } | | |
| } | | |
| } | | |
| } | | |

# FIG. 31

DSS syntax (3)

| Syntax | Size | Type |
|---|---|---|
| disparity_shift_update_sequence() { | | |
|     disparity_shift_update_sequence_length | 8 | bslbf |
|     interval_duration[23..0] | 24 | uimsbf |
|     division_period_count | 8 | uimsbf |
|     for (i= 0; i< division_period_count; i ++) { | | |
|       interval_count | 8 | uimsbf |
|       disparity_shift_update_integer_part | 8 | tcimbsf |
|     } | | |
| } | | |

# FIG. 32

Semantics :

dss_version_number :

indicates the version of this disparity_signalling_segment.

The version number is incremented (modulo 16) if *any of the parameters for this particular disparity_signalling_segment are modified.*

disparity_shift_update_sequence_page_flag :

if „1" then the disparity_shift_update_sequence immediately following is to be applied to the page_default_disparity_shift.

If „0" then a disparity_shift_update_sequence for page_default_disparity_shift is not included.

page_default_disparity_shift :

specifies the default disparity value which should be applied to all regions within the page, and is indicated by a signed integer to range between + 127 & -128 pixels.

processed_length :

the total number of bytes that have already been processed following the segment_length field.

# FIG. 33

Semantics :
region_id :

    identifies the region to which the following subregion data refers.
    Regions which have been declared in the display set but which are not
    referenced in the while-loop shall adopt the page_default_disparity and
    its associated disparity_update_sequence where present.

disparity_shift_update_sequence_region_flag :

    if „1" then a disparity_shift_update_sequence is included for all subregions
    of this region.
    If „0" then a disparity_shift_update_sequence for this region is not included.

number_of_subregions_minus_1 :

    the number of subregions minus one which apply to this region.
    If number_of_subregions_minus_1 = 0 then the region has only one subregion
    whose dimensions are the same as the region and the signalled disparity
    therefore applies to the whole region.
    If number_of_subregions_minus_1 > 0 then the subregions are spatially
    enclosed by horizontally splitting the region.

subregion_horizontal_position :

    specifies the left-hand most pixel position of this subregion.

subregion_width :

    specifies the horizontal width of this subregion expressed in pixels.
    The combination of subregion_horizontal_position and subregion_width
    shall always fall within the declared extent of the region to which this refers.
    The value of this field shall therefore be in the range 1..4095.

FIG. 34

Semantics :
subregion_disparity_shift_integer_part :

specifies the integer part of the disparity shift value which should be applied
to all subtitle pixel data enclosed within this subregion.
This allows the disparity to range between + 127 & -128 pixels.

subregion_disparity_shift_fractional_part :

specifies the fractional part of the disparity shift value which should be applied
to all subtitle pixel data enclosed within this subregion.
When used as an extension of the integer part, this allows the signalled
disparity shift to be defined to 1/16 pixel accuracy.

Note that this fractional part is unsigned (0b0001 represents 1/16 pixel
and 0b1111 represents 15/16 pixel) and should be combined with the integer part
according to the sign of the integer part.

Note : Any processing (either at the encoder or the decoder) which needs
to implement only integer values of disparity shift shall ensure values are
rounded "towards the viewer" (i.e. that positive values of disparity are rounded down
and negative values rounded up).
disparity_shift_update_sequence_length :

specifies the number of bytes contained in the disparity_shift_update_sequence
which follows this field.

# FIG. 35

Semantics :

interval_duration :
　　　　specifies the unit of interval used to calculate the PTS for the disparity update
　　　　as a 24-bit field (in 90 kHz STC increments).
　　　　The value of interval_duration shall correspond to an exact multiple ($\geq$1)
　　　　of frame periods. The maximum increment is just over 186 seconds
division_period_count :
　　　　specifies the number of unique disparity values ($\geq$ 1) and hence the number
　　　　of time intervals within the following disparity_shift_update_sequence
　　　　„for" loop.
interval_count :
　　　　specifies the multiplier used to calculate the PTS for this disparity update
　　　　from the initial PTS value. The calculation for the PTS for this update is
　　　　PTSnew = PTSprevious + (interval_duration * interval_count)
　　　　where interval count $\geq$ 1, where PTSnew increases with every iteration
　　　　of the loop and where the initial value of PTSprevious is the PTS signalled
　　　　in the PES header.
disparity_shift_update_integer_part :
　　　　specifies the integer part of the disparity update value which should
　　　　be applied to all subtitle pixel data enclosed within this page or this subregion.
　　　　This allows the disparity to excurse + 127 to -128 pixel.

## FIG. 36

CONCEPT OF BROADCAST RECEPTION (3D RECEPTION)

# FIG. 37

CONCEPT OF BROADCAST RECEPTION (2D LEGACY RECEPTION)

3D subtitle stream

Region 0

A B C

SR 00
-Position
-Disparity1

BROADCASTING STATION

100

A B C

Legacy 2D STB

HDMI

A B C

TV

300

Legacy 2DTV

300

A B C

A B C

FIG. 38

(a)

BACKGROUND

CLOSEUP VIEW OBJECT

Image Popped Up ! ◀—— CAPTION

(b)

BACKGROUND

CLOSEUP VIEW OBJECT

CAPTION

FIG. 39

(a)

BACKGROUND

CLOSEUP VIEW OBJECT

Image Popped Up !

CAPTION

(b)

LGI

Image Popped Up !

RGI

Image Popped Up !

(c)

Image Popped Up !

FIG. 40

## FIG. 41

DISPLAY CONTROL
INFORMATION

## FIG. 42

Syntax of multi_decoding descriptor

| Syntax | Size | Type |
|---|---|---|
| multi_decoding descriptor() { | | |
| descriptor_tag | 8 | uimsbf |
| descriptor_length | 8 | uimsbf |
| reserved | 4 | bslbf |
| stream_content | 4 | uimsbf |
| component_type | 8 | uimsbf |
| component_tag | 8 | uimsbf |
| multi_decoding_count | 4 | uimsbf |
| reserved | 4 | bslbf |
| for (i= 0; i< multi_decoding_count; i ++) { | | |
| target_stream_component_type | 8 | uimsbf |
| target_stream_component_tag | 8 | uimsbf |
| } | | |
| } | | |

# FIG. 43

Semantics of multi_decoding descriptor

stream_content  (4)
Specifies the type (video, audio, subtitles ) of stream.
component_type (8)
Specifies the type of video, audio, subtitles component.
component_tag (8)
Has the same value as the component _tag field in the stream identifier descriptor.
multi_decoding_count (4)
Specifies the number of  corresponding streams.
target_stream_component_type (8)
Specifies the type of target video, audio, subtitles component to be decoded together with the main stream.
target_stream_component_tag(8)
Has the same value as the component _tag field in the target stream identifier descriptor.

## FIG. 44

```
            ┌─────────────────────────────────┐
            │        Transport Stream         │
            └─────────────────────────────────┘

      ┌─────┐         ┌─────┐   ┌──────────────────────────┐        ┌────────────────────┐  ┌───┐┌───┐┌───┐
      │ PMT │         │ EIT │   │ Component descriptor     │        │ PID1: Subtitle PES1│  │DDS││PCS││RCS│
      └─────┘         └─────┘   │ (stream_content=subtitle,│        └────────────────────┘  ├───┤├───┤├───┤
                                │ component_type=2D,       │                                │CDS││ODS││EDS│
                                │ component_tag=0x1a)      │                                └───┘└───┘└───┘
                                └──────────────────────────┘                   ┌──────────────────────┐
                  ┌─────────────────┐  ┌──────────────────────────┐            │ Segments             │
                  │ Subtitle ES loop│  │ Component descriptor     │            │ (page_id=0xXXXX)     │
                  └─────────────────┘  │ (stream_content=subtitle,│            └──────────────────────┘
                                       │ component_type=3D,       │
                                       │ component_tag=0x2a)      │        ┌────────────────────┐  ┌───┐┌───┐┌───┐
  ┌─────────────────────────┐          └──────────────────────────┘        │ PID2: Subtitle PES2│  │DDS││DSS││EDS│
  │ Multi_decoding descriptor│                                             └────────────────────┘  └───┘└───┘└───┘
  │                         │  ┌───────────────────────────────────────────────────────┐
  │ stream_content=subtitle │  │ Stream_type (=private1 "subtitle")                    │   ┌──────────────────────┐
  │ component_type=2D       │  │ Elementary PID (PID1)                                 │   │ Segments             │
  │ component_tag=0x1a      │  │ Subtitle descriptor                                   │   │ (page_id=0xXXXX)     │
  │                         │  │     (Subtitling_type=2D, composition_page_id=0xXXXX)  │   └──────────────────────┘
  │ target_stream_          │  │ Stream_identifier descriptor                          │
  │   component_type=3D     │  │     component_tag (=0x1a)                             │
  │ target_stream_          │  └───────────────────────────────────────────────────────┘
  │   component_tag=0x2a    │  ┌───────────────────────────────────────────────────────┐
  └─────────────────────────┘  │ Stream_type (=private1 "subtitle")                    │
                               │ Elementary PID (PID2)                                 │
                               │ Subtitle descriptor                                   │
                               │     (Subtitling_type=3D, composition_page_id=0xXXXX)  │
                               │ Stream_identifier descriptor                          │
                               │     component_tag (=0x2a)                             │
                               └───────────────────────────────────────────────────────┘
```

FIG. 45

FIG. 46

300

FIG. 47

FIG. 48

## FIG. 49

10A

BROADCASTING
STATION

110 ~ TRANSMISSION
DATA
GENERATING
UNIT

100

TS →

TV

BIT STREAM
PROCESSING
UNIT

306

→ 3D SIGNAL
PROCESSING
UNIT

301

300

## FIG. 50

C

B(Lb,Rb)

SCREEN

Ra ← La

DPa

Lc → Rc

DPc

A

LEFT
EYE

RIGHT
EYE

<table>
<tr><td colspan="2">**INTERNATIONAL SEARCH REPORT**</td><td colspan="2">International application No.<br>PCT/JP2012/065710</td></tr>
</table>

A. CLASSIFICATION OF SUBJECT MATTER
*H04N13/00*(2006.01)i, *H04N7/173*(2011.01)i

According to International Patent Classification (IPC) or to both national classification and IPC

B. FIELDS SEARCHED

Minimum documentation searched (classification system followed by classification symbols)
H04N13/00, H04N7/173

Documentation searched other than minimum documentation to the extent that such documents are included in the fields searched
    Jitsuyo Shinan Koho          1922-1996   Jitsuyo Shinan Toroku Koho   1996-2012
    Kokai Jitsuyo Shinan Koho    1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-030200 A  (Sony Corp.),<br>10 February 2011 (10.02.2011),<br>entire text; all drawings<br>& WO 2011/001857 A1 | 1-18 |
| A | JP 2011-030193 A  (Sony Corp.),<br>10 February 2011 (10.02.2011),<br>entire text; all drawings<br>& US 2011/0134210 A1     & WO 2011/001858 A1 | 1-18 |
| A | JP 2004-274125 A  (Sony Corp.),<br>30 September 2004 (30.09.2004),<br>entire text; all drawings<br>(Family: none) | 1-18 |

[X] Further documents are listed in the continuation of Box C.     [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
    15 August, 2012 (15.08.12)

Date of mailing of the international search report
    18 September, 2012 (18.09.12)

Name and mailing address of the ISA/
    Japanese Patent Office

Facsimile No.

Authorized officer

Telephone No.

Form PCT/ISA/210 (second sheet) (July 2009)

**INTERNATIONAL SEARCH REPORT**

| International application No. |
| --- |
| PCT/JP2012/065710 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2005-006114 A  (Sharp Corp.),<br>06 January 2005 (06.01.2005),<br>entire text; all drawings<br>(Family: none) | 1-18 |

Form PCT/ISA/210 (continuation of second sheet) (July 2009)

**EP 2 603 004 A1**

**Patent documents cited in the description**

- JP 2005006114 A